# EUROPEAN PATENT APPLICATION

(11) **EP 4 418 790 A1**
(43) Date of publication of application: **21.08.2024**
(21) Application number: 23156443.6
(22) Date of filing: 14.02.2023
(51) Int. Cl.: H04W 72/21, H04W 72/1268

(54) **USER EQUIPMENT AND BASE STATION INVOLVED IN TRANSMISSION OF DATA**

(71) Applicant: Panasonic Intellectual Property Corporation of America, Torrance, CA 90504 (US)
(72) Inventor: SHARIATMADARI, Hamidreza, 63225 Langen (DE); SUZUKI, Hidetoshi, Osaka, 571-8501 (JP)
(74) Representative: Grünecker Patent- und Rechtsanwälte PartG mbB

(57) **Abstract**

The present disclosure relates to a user equipment, UE, comprising the following. A processing circuitry of the UE generates data for transmission to a base station. The processing circuitry determines at least one of a plurality of uplink radio resources to be used by the UE for transmitting the data. A transmitter of the UE transmits the data to the base station using the determined at least one uplink radio resource. The processing circuitry determines at least one of the plurality of uplink radio resources not to be used by the UE for transmission. The transmitter transmits an unused-resource indication to the base station, indicating the determined at least one uplink radio resource that will not be used by the UE for transmission.

## Description

### Field of the present disclosure

The present disclosure is directed to methods, devices and articles in communication systems, such as 3GPP communication systems.

### Technical Background

Currently, the 3rd Generation Partnership Project (3GPP) works at the technical specifications for the new radio access technology - 5G NR (New Radio), which is also called fifth generation (5G) or NR and used interchangeably herein.

One objective is to provide a single technical framework addressing all usage scenarios, requirements and deployment scenarios (see e.g., section 6 of 3GPP TR 38.913 e.g., version 16.0.0 or version 17.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, while they are different in that the URLLC service may preferably require ultra-low latencies.

A second objective is to achieve forward compatibility, which facilitates a completely new system design and/or the introduction of novel features.

### Summary

One non-limiting and exemplary embodiment facilitates providing procedures for a UE to perform improved transmission procedures.

In an embodiment, the techniques disclosed here feature a user equipment, UE, comprising the following. A processing circuitry of the UE generates data for transmission to a base station. The processing circuitry determines at least one of a plurality of uplink radio resources to be used by the UE for transmitting the data. A transmitter of the UE transmits the data to the base station using the determined at least one uplink radio resource. The processing circuitry determines at least one of the plurality of uplink radio resources not to be used by the UE for transmission. The transmitter transmits an unused-resource indication to the base station, indicating the determined at least one uplink radio resource that will not be used by the UE for transmission.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

### Brief description of the Figures

In the following exemplary embodiments are described in more detail with reference to the attached figures and drawings.
- **Fig. 1**: shows an exemplary architecture for a 3GPP NR system to which the improved procedures of the present disclosure may be applied;
- **Fig. 2**: is a schematic drawing that shows a functional split between NG Radio Access Network (NG-RAN) and 5G Core Network (5GC), to which the improved procedures of the present disclosure may be applied,
- **Fig. 3**: is a sequence diagram for Radio Resource Control (RRC) connection setup/reconfiguration procedures to which the improved procedures of the present disclosure may be applied,
- **Fig. 4**: is a schematic drawing showing usage scenarios of eMBB, mMTC and URLLC to which the improved procedures of the present disclosure may be applied,
- **Fig. 5**: is a block diagram showing an exemplary 3GPP NR system architecture for a non-roaming scenario,
- **Fig. 6**: illustrates the relationship between Bandwidth Parts, Control Resource Sets (CORESETS), search spaces, search space sets, and PDCCH candidates,
- **Fig. 7**: illustrates an exemplary time-domain structure in a communication system, such as 5G NR, including radio frames, subframes, slots, and OFDM symbols for different subcarrier spacings,
- **Fig. 8**: illustrates the exchange of video frame data using periodic uplink resources, of a configured grant,
- **Fig. 9**: illustrates the exchange of video frame data using a set of plural periodic uplink resources, of a configured grant,
- **Fig. 10**: illustrates an exemplary and simplified structure of a UE and a gNB,
- **Fig. 11**: illustrates a structure of the UE according to an exemplary implementation of the improved transmission procedure,
- **Fig. 12**: illustrates a flow diagram for the UE behavior according to an exemplary implementation of the improved transmission procedure,
- **Fig. 13**: illustrates a structure of the base station according to an exemplary implementation of the improved transmission procedure,
- **Fig. 14**: illustrates a flow diagram for the base station behavior according to an exemplary implementation of the improved transmission procedure, and
- **Fig. 15**: is a signaling diagram illustrating an exemplary exchange between the UE and the gNB for an exemplary implementation of the improved transmission procedure.
- **Fig. 16 and 17**: illustrate the exchange of video frame data using periodic uplink resources, of a configured grant, and the transmission of an unused-resource indication, according to different implementations of the improved transmission procedure,
- **Fig. 18**: illustrates the exchange of video frame data using periodic uplink resources, and illustrates the transmission of bitmaps as the unused-resource indications, according to an implementation of the improved transmission procedure,
- **Fig. 19 and 20**: illustrate the exchange of video frame data using periodic uplink resources, and illustrate the transmission of different codepoints as the unused-resource indications, according to an implementation of the improved transmission procedure,
- **Fig. 21**: illustrates the exchange of video frame data using periodic uplink resources, wherein the unused-resource indication indicates the start and duration of a sequence of unused periodic uplink resources, according to an implementation of the improved transmission procedure,
- **Fig. 22**: illustrates the exchange of video frame data using periodic uplink resources, wherein the unused-resource indication indicates unused resources of two different periodic-uplink-resource configuration, according to an implementation of the improved transmission procedure,
- **Fig. 23**: illustrates the exchange of video frame data using periodic uplink resources, wherein the unused-resource indication has a variable size depending on the set position at which the unused-resource indication is transmitted, according to an implementation of the improved transmission procedure,
- **Fig. 24**: illustrates different periodic uplink resources, and particularly uplink control information that can be divided into two parts, according to an implementation of the improved transmission procedure, and
- **Fig. 25**: illustrates the exchange of video frame data using periodic uplink resources, wherein uplink control information that can be divided into two parts, according to an implementation of the improved transmission procedure.

### Detailed Description

### 5G NR system architecture and protocol stacks

3GPP has been working at the next release for the 5^{th} generation cellular technology, simply called 5G, including the development of a new radio access technology operating in frequencies ranging up to 100 GHz. The first version of the 5G standard was completed at the end of 2017, which allows proceeding to 5G NR standard-compliant trials and commercial deployments of smartphones.

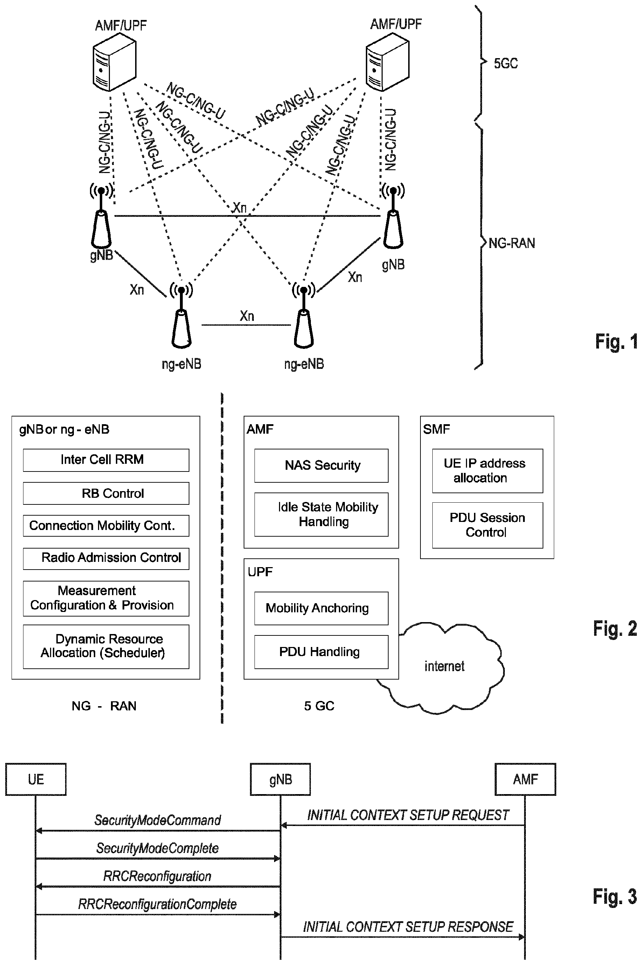

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the 5GC, more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in **Fig. 1** (see e.g., 3GPP TS 38.300 e.g., v17.2.0, section 4).

The user plane protocol stack for NR (see e.g., 3GPP TS 38.300, section 4.4.1) comprises the PDCP (Packet Data Convergence Protocol, see section 6.4 of 3GPP TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g., sub-clause 6.5 of TS 38.300). A control plane protocol stack is also defined for NR (see for instance TS 38.300, section 4.4.2). An overview of the Layer 2 functions is given in sub-clause 6 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15 kHz, 30 kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 e.g., v17.4.0, e.g., section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

### 5G NR functional split between NG-RAN and 5GC

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-linter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g., packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see 3GPP TS 38.300).

RRC is a higher layer signaling (protocol) used for UE and gNB configuration. In particular, this transition may involve that the AMF prepares the UE context data (including e.g., PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a *SecurityModeCommand* message and by the UE responding to the gNB with the *SecurityModeComplete* message. Afterwards, the gNB performs the reconfiguration to setup the Signaling Radio Bearer 2, SRB2, and Data Radio Bearer(s), DRB(s) by means of transmitting to the UE the *RRCReconfiguration* message and, in response, receiving by the gNB the *RRCReconfigurationComplete* from the UE. For a signalling-only connection, the steps relating to the *RRCReconfiguration* are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5GC is provided that comprises circuitry which, in operation, establishes a Next Generation (NG) connection with a gNodeB; and a transmitter which, in operation, transmits an initial context setup message, via the NG connection, to the gNodeB to cause a signaling radio bearer setup between the gNodeB and a user equipment (UE). In particular, the gNodeB transmits an RRC signaling containing a resource allocation configuration information element (IE) to the UE via the signaling radio bearer. The UE then performs an uplink transmission or a downlink reception based on the resource allocation configuration.

### Usage Scenarios of IMT for 2020 and beyond

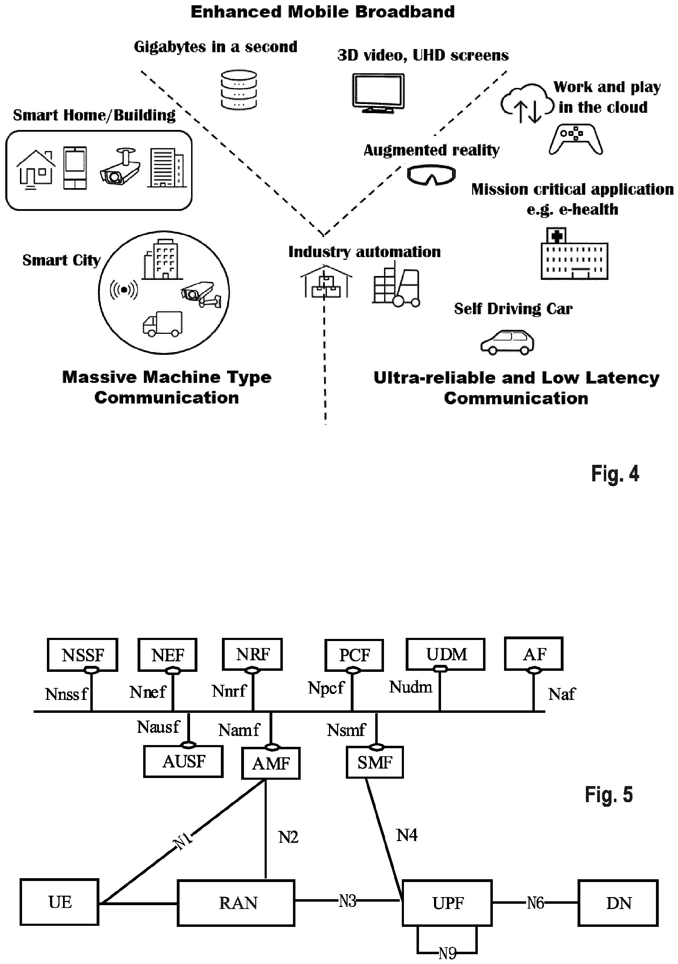

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g., ITU-R M.20183 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by 3GPP TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also, PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g., as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

Fig. 5 illustrates a 5G NR non-roaming reference architecture (see e.g., 3GPP TS 23.501 e.g., v16.9.0, section 4.2.3, see also v17.5.0 or v18.0.0). An Application Function (AF), e.g., an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g., QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g., operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMBB and mMTC services to at least one of functions (for example NEF, AMF, SMF, PCF,UPF, etc.) of the 5GC to establish a PDU session including a radio bearer between a gNodeB and a UE in accordance with the QoS requirement and circuitry, which, in operation, performs the services using the established PDU session.

### Bandwidth Parts - BWP

NR systems will support much wider maximum channel bandwidths than LTE's 20 MHz bandwidth (e.g. 100 MHz). Wideband communication is also supported in LTE via carrier aggregation (CA) of up to 20-MHz component carriers. By defining wider channel bandwidths in NR, it is possible to dynamically allocate frequency resources via scheduling, which can be more efficient and flexible than the Carrier Aggregation operation of LTE, whose activation/deactivation is based on MAC Control Elements. Having a single wideband carrier also has merits in terms of low control overhead, as it needs only a single control signaling (Carrier Aggregation requires separate control signaling per each aggregated carrier).

Moreover, like LTE, NR may also support the aggregation of multiple carriers via carrier aggregation or dual connectivity.

Since UEs are not always demanding high data rates, the use of a wide bandwidth may incur higher idling power consumption both from RF and baseband signal processing perspectives. In this regard, a newly developed concept of bandwidth parts for NR provides a means of operating UEs with smaller bandwidths than the configured channel bandwidth, so as to provide an energy-efficient solution despite the support of wideband operation. Any low-end terminal, which cannot access the whole bandwidth for NR, can benefit therefrom.

A bandwidth part (BWP) is a subset of the total cell bandwidth of a cell, e.g. defined by the location and number of contiguous physical resource blocks (PRBs). It may be defined separately for uplink and downlink. Furthermore, each bandwidth part can be associated with a specific OFDM numerology, e.g. with a subcarrier spacing and cyclic prefix. For instance, bandwidth adaptation is achieved by configuring the UE with BWP(s) and by telling the UE which one of the configured BWPs is currently the active one.

Exemplarily, in 5G NR, a specific BWP is configured only for a UE in RRC_Connected state. For instance, other than an initial BWP (e.g. respectively one for UL and one for DL), a BWP only exists for UEs in connected state. To support the initial data exchange between the UE and the network, e.g. during the process of moving a UE from RRC_IDLE or RRC_INACTIVE state to RRC_CONNECTED state, the initial DL BWP and initial UL BWP are configured in the minimum system information.

Although the UE can be configured with more than one BWP (e.g. up to 4 BWP per serving cell, as currently defined for NR), the UE has only one active DL BWP at a time.

More information on the BWP operation can be found in section 5.15 of 3GPP TS 38.321 e.g. v17.2.0.

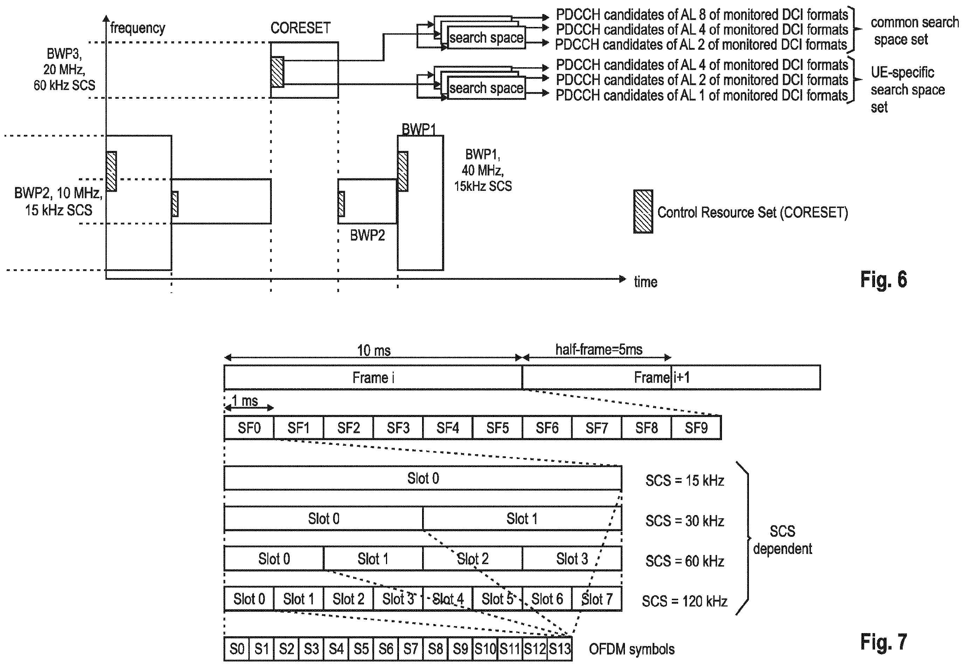

**Fig. 6** illustrates a scenario where three different BWPs are configured, BWP1 with a frequency bandwidth of 40 MHz and a subcarrier spacing of 15 kHz, BWP2 with a width of 10 MHz and a subcarrier spacing of 15 kHz, and BWP3 with a width of 20 MHz and subcarrier spacing of 60 kHz.

The different BWPs can be e.g. configured using suitable information elements of the RRC protocol. A Carrier Bandwidth Part is a contiguous set of physical resource blocks, selected from a contiguous subset of the common resource blocks for a given numerology(u) on a given carrier.

### Time-domain in 5G NR

In the time domain, transmissions in 5G NR are organized into frames of length 10ms, each of which is divided into 10 equally sized subframes of length 1ms. A subframe in turn is divided into one or more slots consisting of 14 OFDM symbols each. The duration of a slot in milliseconds depends on the numerology. For instance, for the 15 kHz subcarrier spacing, an NR slot thus has the same structure as an LTE subframe with normal cyclic prefix. A subframe in 5G NR serves as a numerology-independent time reference, which is useful, especially in the case of multiple numerologies being mixed on the same carrier, while a slot is the typical dynamic scheduling unit. This frame structure, on which the 3GPP 5G NR communication is based, is illustrated exemplarily in **Fig. 7****.**

5G NR provides a plurality of slot formats, and a slot format indicates how each of the symbols within a single slot is used. It defines which symbols within a specific slot are used for uplink and which symbols are used for downlink. In LTE TDD, if a subframe (equivalent to a slot in NR) is configured for DL or UL, all of the symbols within the subframe should be used as DL or UL. But in NR, each of the symbols within a slot can be configured differently as DL or UL. Also flexible symbols exist, which can be configured as DL or UL. In the exemplary 5G NR compliant implementation, the gNB uses a slot format indicator (SFI) to inform the UE about the slot format to be used (see also TS 38.213 v17.4.0 section 11.1.1). For instance, the slot format indicator includes an index value, associated with a slot format (e.g. in the form of a table).

### Uplink Control Information in 5G NR and Scheduling Requests

Whereas Downlink Control Information is carried by the PDCCH, Uplink Control Information (UCI) can be transmitted on the PUCCH or the PUSCH depending on the situation. Uplink control information can be e.g. the channel state information (CSI), the ACK/NACK information and scheduling requests. Not all of these need be carried by a single transmission. For instance, the CSI may be carried alone, or the ACK/NACK may be carried alone, or the SR may be carried alone, or the CSI and ACK/NACK are transmitted together in a PUCCH/PUSCH, etc.

There are a plurality of different PUCCH formats that can be used for transmitting the UCI, presently there are five PUCCH formats, 0-4. Two of the formats, 0 and 2, are sometimes referred to as short PUCCH formats, because they occupy at most 2 OFDM symbols. In many cases the last one or 2 OFDM symbols in a slot are used for PUCCH transmission, for example, to transmit a hybrid ARQ acknowledgment (ACK/NACK) for the downlink data transmission.

Three of the formats, 1, 3, and 4, are sometimes referred to as long PUCCH formats because they occupy from 4 to 14 OFDM symbols. The reason for having a longer time duration than the previous two formats is coverage. If a duration of one or two OFDM symbols does not provide sufficient received energy for a reliable reception, a longer time duration is necessary and one of the long PUCCH formats can be used.

Which PUCCH format is used can be e.g. determined based on how many bits of UCI should be transmitted and how many symbols (duration of the PUCCH) can be used, as exemplary illustrated in the following table (see e.g. 3GPP TS 38.211 e.g. v17.4.0, section 6.3.2).

The UCI can be transmitted on the PUCCH flexibly in the time and frequency domain using specifically assigned radio resources, e.g. PUCCH resource sets. A UE can be configured with up to four sets of PUCCH resources, wherein a PUCCH resource set is associated with a PUCCH resource set index. In particular, a PUCCH resource set contains at least four PUCCH resource configurations, where each resource configuration contains the PUCCH format to use and all the transmission parameters necessary for that format. The configuration of such resources can be done by different information elements, e.g. of the RRC protocol layer, such as the PUCCH-Config information element (see e.g. 3GPP TS 38.331 e.g. v16.7.0, such as section 6.3.2).

As mentioned, up to four PUCCH resource sets can be configured for a UE, each of them corresponding to a certain range of UCI feedback to transmit. For instance, PUCCH resource set 0 can handle UCI payloads up to two bits and hence only contains PUCCH formats 0 and 1, while the remaining PUCCH resource sets may contain any PUCCH format except format 0 and 1.

The current reporting of the UCI in the PUCCH is defined in 3GPP TS 38.213 e.g. v17.4.0, section 9.2.

### Configured grant in uplink

In the downlink, the gNB can dynamically allocate resources to UEs via the C-RNTI on PDCCH(s) (see e.g. DCIs above). Similarly, in the uplink, the gNB can dynamically allocate resources to UEs via the C-RNTI on PDCCH(s) (see e.g. DCIs above). In addition to dynamically allocating downlink resources and uplink resources, 5G NR also provides scheduling enhancements according to which resource allocation can be implemented in 5G NR based on semi-persistent scheduling (SPS) in the downlink and based on a configured grant CG) in the uplink.

Uplink data transmissions typically require resources being requested by the UE, followed by a packed scheduling decision and resource allocation at the scheduling side (e.g. base station). The allocation cycle causes an additional delay and signaling. The radio resource allocation delay between the UE and the base station can be avoided by allowing the UE to use radio resources without previously requesting same from the base station. This can be implemented by so-called configured grants (CG).

In addition, by using configured grants, multiple devices (UEs) may be allowed to share periodic radio resources (which facilitates reducing the waste of the periodic radio resources compared to the LTE SPS). On the other hand, there is also the possibility that the gNB defines the periodic radio resources in such a manner that they are not or nor completely shared between multiple UEs. The gNB allocates configured-grant radio resources to one or multiple UEs, which then randomly utilize these periodic radio resources when they have to transmit data (e.g. small data). With the CG, the network eliminates packet transmission delays caused by a specific scheduling request procedure that would have to be performed otherwise before being able to send data. Thereby, the utilization ratio of allocated periodic radio resources may be increased as well.

There are two types of grant free configuration schemes supported in 3GPP Release 16 and Release 17, namely Type 1 and Type 2 (see 3GPP 38.300 e.g. v16.8.0 or v17.2.0, section 10.3). According to this exemplary implementation of 3GPP TS 38.300, using the Type-1 CG, the RRC directly provides the configured uplink grant to the UE(s), e.g. including its periodicity.

With a configured grant of Type 2, the RRC defines the periodicity of the configured uplink grant while a PDCCH message addressed to the CS-RNTI of the UE(s) can either signal and activate the configured uplink grant, or deactivate it; a PDCCH addressed to the CS-RNTI indicates that the uplink grant can be implicitly reused according to the periodicity defined by RRC, until deactivated. In other words, an additional L1 signaling (e.g. the PDCCH) is introduced, where the uplink is semi-persistently scheduled by an RRC-based uplink grant that is activated/deactivated by a (de)activation DCI. RRC provides the higher layer parameters for the CG configuration.

In both cases, according to the exemplary 3GPP implementation, the RRC provides the grant configuration to the UE through a higher-layer parameter called *ConfiguredGrantConfig.* (see 3GPP TS 38.331 v17.2.0, section 6.3.2 "*Radio resource control information elements*").

A resource configuration for a CG may for instance comprise physical resources in a time domain and/or frequency domain, and/or reference signal (RS) parameters. The configuration parameter may further include a modulation and coding scheme (MCS) (e.g. indicating a modulation scheme and a coding rate) and/or a number of repetitions and/or a cycle period and/or a transport block size.

Retransmissions other than repetitions can be explicitly allocated via PDCCH(s) or via configuration of a retransmission timer.

Different periodicities are supported for UL CG, which may depend on the Subcarrier spacings. One example of the currently defined periodicities in TS 38.331, when being dependent on SCS, are presented in the following:
- For SCS of 15 KHz: Multiple of 1 ms up to 640 ms, or multiple of 2 symbols (1/7 ms), or multiple of 7 symbols (0,5 ms)
- For SCS of 30 KHz: Multiple of 1/2 ms up to 640 ms, or multiple of 2 symbols (1/14 ms), or multiple of 7 symbols (0,25 ms).

In the above described CG concept, one CG configuration defines one CG occasion (e.g. time and frequency resources), occurring periodically (according to the periodicity).

On the other hand, in 3GPP there have been further discussions regarding the possibility to configure a plurality of CG occasions per CG configuration. Put differently, a single CG PUSCH configuration defines multiple CG PUSCH transmission occasions for a period of time. In the following, the multiple CG PUSCH transmissions occasions with the period of time will be exemplarily denoted "set of CG occasions" (or similar). As one example, such a set of CG occasions can be defined based on the periodicity of the multiple CG occasions within the set, in addition to the periodicity between two subsequent CG sets. As another example, such a set of CG occasions can be defined based on the periodicity between two subsequent CG sets, and a slot offset between CG occasions within the set.

### XR - extended Reality in Rel. 18

A 3GPP study item relates to extended Reality (XR) in RAN 1 and RAN 2. The aim is to provide efficient communications for augmented reality (AR), virtual reality (VR), mixed reality (MR) and cloud gaming, while reducing the power consumption and increasing the system capacity. In particular, techniques are studied for XR (eXtended Reality), e.g. to accommodate XR service characteristics, such as periodicity, multiple flows, jitter, latency, reliability, etc. The considered XR applications require a high data rate in downlink (DL) and uplink (UL) with a relatively strict packet delay budget (PDB).

Furthermore, some of the XR applications run on devices with a limited source of energy, such as wearable glasses or handheld devices. Thus, energy efficiency is an important concern.

The XR applications impose a variety of data traffics, including video streams and pose/control traffics. The video frames are quite large with varying sizes. They are characterized as quasi-periodic, because video frames arrive over a time window. In addition, the periodicity of the time window is non-integer regarding radio frame/slot/symbols.
- Packet size: For a high-quality video stream, the frame size would be around 1M bits after compression for an 8K video. This leads to having large size packets.
- Varying size: The frame sizes could vary e.g. due to the I-frame or P-frame/B-frame.
- Periodicities: A video stream generally generates 60/90/120 fps, which correspond to the periodicity of 16.667, 11.111, and 8.333 ms, respectively.
- Jitter: The frame packets would arrive at the gNB/UE over a time window of e.g. [-4, 4] ms or even a larger time window.
- Delay budget: The delay budget for delivering the XR packets could be tight, for instance, 10ms for AR/VR and 15ms for cloud gaming.

### Further Improvements

In the above, the study item for XR was briefly presented. However, the current 5G NR releases cannot efficiently support the XR traffics, for example video streams. This is e.g. due to the non-integer periodicity of the video packets, the varying arrival of packets, and the large and varying packet sizes.

The above-explained CG resources could be used for delivering periodic traffic in the uplink, such as the video frame data. This can be achieved by reserving periodic uplink resources for the transmissions. The UE can be configured with one or several CG configurations, respectively defining one or more CG occasions that repeat with a given periodicity. The use of such a CG scheme facilitates achieving a better reliability with reduced signaling overhead, since there is no need to send a downlink control information (DCI) indicating individual scheduling resources.

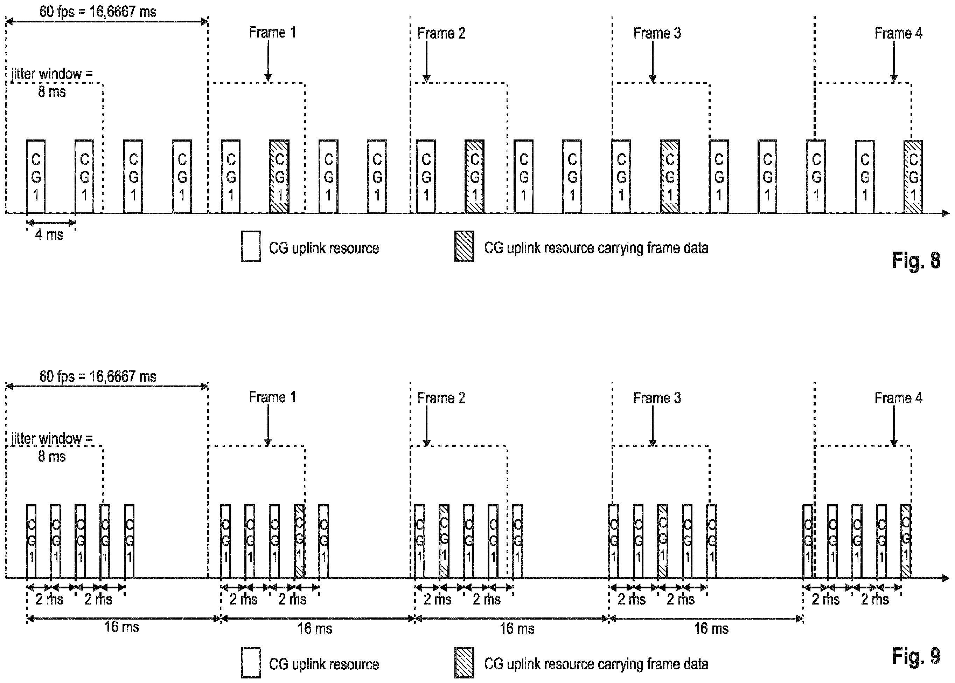

However, using CG, may cause a waste of resources, as will become apparent from the following Fig. 8 and 9. Both **Fig. 8 and Fig. 9** illustrate exemplary scenarios in which an over-provision of CG uplink resources occurs for transmitting in the uplink a video stream with 60 fps. For ease of illustration and understanding, exemplary assumptions are made as follows. A video stream with 60 fps is assumed, such that a video frame is generated every 1/60=16,6667 ms. The video frames are generated at the UE side over a jitter window of 8 ms. The UE at its upper application layer might be aware of when the jitter window occurs.

Fig. 8 and Fig. 9 illustrate how four video frames arrive at different times within the respective jitter windows and are then transmitted by available CG uplink resources, within or (partly) outside the jitter windows. The unused periodic CG uplink resources are illustrated with empty boxes, while periodic CG uplink resources used for transmitting video frames are illustrated with striped boxes.

In **Fig.8** it is further assumed that there is only one active CG configuration (denoted CG1) used by the UE, defining CG uplink resources with a periodicity of 4 ms. The periodicities of the CG uplink resources (4 ms) and the video frames (16,6667 ms) do not coincide and result in a relative shift of the occurrence of the CG uplink resources with respect to the jitter window, within which the video frames are generated.

In **Fig. 9** it is further assumed that the one active CG configuration (denoted CG1) configures a plurality of CG uplink resources for use by the UE, here exemplarily 5 CG uplink resources are configured with a respective periodicity of 2 ms between each of the 5 CG resources. The CG configuration defines as an example a periodicity of e.g. 16 ms between subsequent CG resource sets, and thus can have a similar periodicity as the video frame periodicity.

In both Fig. 8 and Fig. 9, sufficient opportunities are provided for the UE to transmit a video frame as early as possible, in order to avoid a long latency of the video frame transmission. While the over-provision of CG resources can achieve a low latency, it results in a low resource utilization because only one (or a few, if more than one CG resource is used for the video frame data transmission) of the CG resources are actually used for the transmission of the frame data. Assuming the absence of any other data for transmission, the remaining CG resources are not used by the UE. Further, these remaining unused CG resources may also not be used differently, since the gNB is not aware that they will not be used, and thus the gNB cannot re-schedule these unused CG resources, e.g. for an uplink transmission by another UE or for a downlink transmission.

The inventors have thus identified the possibility of providing improved transmission procedures, for allowing to avoid one or more of the above described disadvantages. The present invention relates to different solutions and variants for such improved transmission procedures.

XR and video streams are however only particular exemplary scenarios for which the above disadvantages exist. There are other scenarios too. Consequently, the present invention and its solutions do not only apply to XR and video streams.

### Embodiments

In the following, UEs, base stations, and respective procedures to meet these needs will be described for the new radio access technology envisioned for the 5G mobile communication systems, but which may also be used in previous LTE-based mobile communication systems or future (e.g. 6G) mobile communication systems. Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the respective features and solutions. Consequently, a skilled person is aware that the solutions and their scope of protection should not be restricted to particular terms exemplarily used herein for lack of newer or finally agreed terminology, but should be more broadly understood in terms of functions and concepts that underlie the solutions explained in the present disclosure.

For instance, a **mobile station or mobile node or user terminal or user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be gNB in a Non-Terrestrial Network (NTN) NR system.

Communication between the UE and the base station is typically standardized and may be defined by different layers, such as PHY, MAC, RRC etc. (see above background discussion).

The expression **"radio resources"** used herein may cover both periodic radio resources as well as dynamically-allocated radio resources.

The expression **"periodic uplink radio resources"** used in the application is to be broadly understood as referring to radio resources (e.g. in the time and/or frequency domain) that occur periodically in time. According to an exemplary 5G compliant implementation, the periodic uplink radio resources can be defined by a configured grant, CG, configuration (see above part on CG) in advance by the corresponding base station (serving the UE) and are thus already configured and usable by the UE so as to transmit data in the uplink, without the need that the UE first has to request uplink radio resources. In other words, there is no need for the base station to individually allocate these uplink resources. Correspondingly, the "periodic uplink radio resources" may also be termed "CG occasions" or "CG transmission occasion" or "CG transmission opportunity", or similar.

The term **"unused"** as used herein can be understood e.g. as indicating a state of an uplink radio resource, namely in that it is or will not used by the UE for transmission (e.g. no user data or control information is transmitted using said "unused uplink radio resource"). This state of an uplink radio resource can be determined or set by the UE and then reported to the base station, in accordance with the improved transmission procedures. Depending on the circumstances, the UE can e.g. set one (or more) uplink radio resources as being "unused" for being indicated, even though it is yet uncertain which uplink radio resources will actually be used for transmitting the data (e.g. in case the determination is performed before the data is generated).

The expression **"jitter window"** as used herein can be understood as referring to a property of how video frames are generated for a video application. Rather than being always generated at specific periodic points in time, the video frames are generated quasi-periodically, namely over a time window that is periodical. Other possible expressions could be **"time window", "video-frame-generation window", "packet arrival window"** or **"frame arrival window"** or similar expressions.

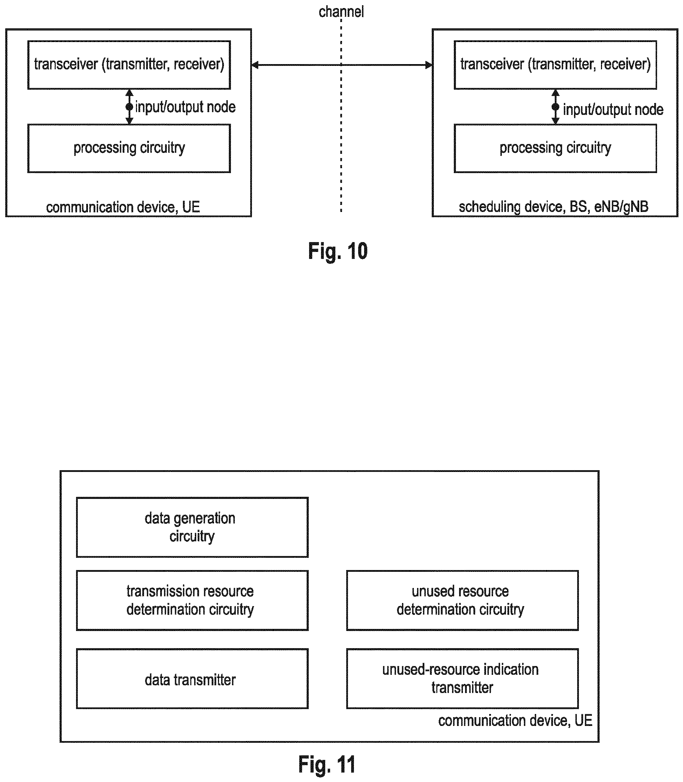

**Fig. 10** illustrates a general, simplified and exemplary block diagram of a user equipment (also termed communication device) and a scheduling device (here exemplarily assumed to be located in the base station, e.g., the LTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e., control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

Different solutions of improved transmission procedures will be described in the following. In said connection, improved UEs, improved base stations and improved integrated circuits are presented, which participate separately or together in the improved transmission procedures. Corresponding methods for the UE behavior and the base station behavior are provided as well. The integrated circuits may correspond to the UE and base station, and respectively their behavior.

The present solutions of the improved transmission procedures can be based on some or a combination of the different mechanisms described above in context of the exemplary 3GPP 5G-NR implementations, including e.g. the use of the signaling mechanisms (e.g. for configuring periodic uplink resources, CG) or details on the implementation scenarios (see XR) as currently discussed in 3GPP.

**Fig. 11** illustrates a simplified and exemplary UE structure according to an exemplary implementation of the improved transmission procedure, which can be implemented based on the general UE structure explained in connection with Fig. 10. The various structural elements of the UE illustrated in said Fig. 11 can be interconnected between one another e.g., with corresponding input/output nodes (not shown) e.g., in order to exchange control and user data and other signals. Although not shown for illustration purposes, the UE may include further structural elements.

As apparent from Fig. 11, the UE may include a data generation circuitry, a transmission resource determination circuitry, a data transmitter, an unused resource determination circuitry, and an unused-resource indication transmitter.

In the present case as will become apparent from the below disclosure, the receiver of the UE can thus be exemplarily configured to at least partly perform one or more of receiving configuration information for the uplink radio resources, mapping information for setting the unused-resource indication, etc.

In the present case as will become apparent from the below disclosure, the processing circuitry of the UE can thus be exemplarily configured to at least partly perform one or more of generating data, determining uplink radio resources for transmitting the data, determining uplink radio resources that will not be used by the UE for transmission, etc.

In the present case as will become apparent from the below disclosure, the transmitter of the UE can thus be exemplarily configured to at least partly perform one or more of transmitting the data, the unused-resource indication, and mapping information for setting the unused-resource indication, etc.

One exemplary procedure as will be disclosed in more detail further below is implemented by a UE that includes the following. A processing circuitry of the UE generates data for transmission to a base station. The processing circuitry determines at least one of a plurality of uplink radio resources to be used by the UE for transmitting the data. A transmitter of the UE transmits the data to the base station using the determined at least one uplink radio resource. The processing circuitry determines at least one of the plurality of uplink radio resources not to be used by the UE for transmission. The transmitter transmits an unused-resource indication to the base station, indicating the determined at least one uplink radio resource that will not be used by the UE for transmission.

A corresponding exemplary method comprises the following steps performed by a UE:
generating data for transmission to a base station,
determining at least one of a plurality of uplink radio resources to be used by the UE for transmitting the data,
transmitting the data to the base station using the determined at least one uplink radio resource,
wherein the method also comprises:
   determining at least one of the plurality of uplink radio resources not to be used by the UE for transmission,
   transmitting an unused-resource indication, indicating the determined at least one uplink radio resource that will not be used by the UE for transmission.

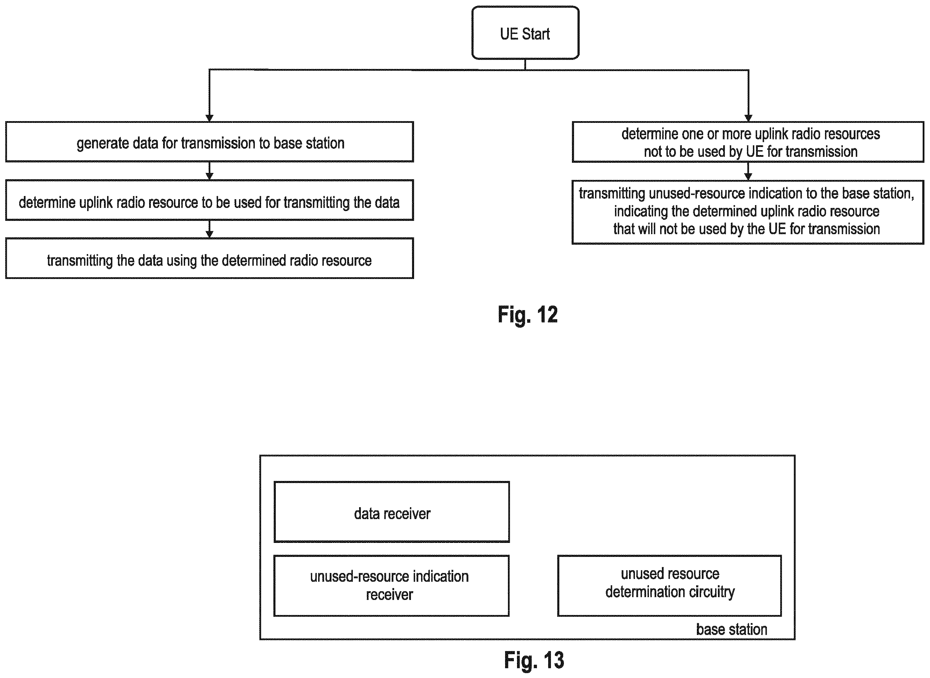

A corresponding sequence diagram for an exemplary UE behaviour in line with the above-discussed UE and UE method is in **Fig. 12****.**

As apparent therefrom, the data-transmission-related steps are illustrated in parallel to the unused-resource-related steps. Correspondingly, the sequential order of the data-transmission-related steps may comply with what is illustrated, i.e. UE first generates data, then determines uplink radio resources, and then transmits the data. Similarly, the sequential order of the unused-resource-related steps may comply with what is illustrated, i.e. UE first determines unused uplink radio resources , and then transmits a suitable unused-resource indication.

On the other hand, the order of the unused-resource-related steps and the data-transmission-related steps relative to each other need not be limited. Put differently, the unused-resource-related steps can be performed independently from the data-transmission-related steps, e.g. before, simultaneously, or after. For instance, the step of determining unused uplink radio resources can be performed even before the step of generating data for transmission or before even determining the uplink radio resources that are to be used for transmitting the data; it can also be performed together with determining the uplink radio resources for transmitting the data. As another example, the transmission of the unused-resource indication can be performed together with the transmission of the data but also before or after the data is transmitted.

The above-described transmission procedure thus achieves the object and overcomes some of the drawbacks explained above. For instance, by transmitting the unused-resource indication from the UE to the base station, it is possible that the base station learns about unused uplink radio resources, which it can reschedule them if necessary. Consequently, less resources may be wasted.

Some exemplary implementations of the improved transmission procedure also involve improved base stations. Correspondingly, the improved transmission procedure also provides improved base stations that participate therein, as will be explained in the following.

**Fig. 13** illustrates a simplified and exemplary base station structure according to an exemplary implementation of the improved transmission procedure, which can be implemented based on the general base station structure explained in connection with Fig. 10. The various structural elements of the base station illustrated in said Fig. 13 can be interconnected between one another e.g., with corresponding input/output nodes (not shown) e.g., in order to exchange control and user data and other signals. Although not shown for illustration purposes, the base station may include further structural elements.

As apparent therefrom, the base station comprises a data receiver, an unused-resource indication receiver, and an unused-resource determination circuitry.

In the present case as will become apparent from the below disclosure, the receiver of the base station can thus be exemplarily configured to at least partly perform one or more of receiving data and an unused-resource indication, etc.

In the present case as will become apparent from the below disclosure, the processing circuitry of the base station can thus be exemplarily configured to at least partly perform one or more of processing the received unused-resource indication and determining the uplink radio resource that will not be used by the UE, etc.

In the present case as will become apparent from the below disclosure, the transmitter of the base station can thus be exemplarily configured to at least partly perform one or more of transmitting configuration information on the plurality of uplink radio resources, etc.

One exemplary procedure as will be disclosed in more detail further below is implemented by a base station that includes the following. A receiver of the base station receives data from a user equipment, UE, using at least one of a plurality of uplink radio resources. The receiver receives from the UE an unused-resource indication, indicating at least one uplink radio resource, among the plurality of uplink radio resources, that will not be used by the UE for transmission. Processing circuitry of the UE processes the received unused-resource indication to determine the at least one unused uplink radio resource.

A corresponding method comprises the following steps performed by the base station:
receiving data from a user equipment, UE, using at least one of a plurality of uplink radio resources,
receiving an unused-resource indication, indicating at least one uplink radio resource, among the plurality of uplink radio resources, that will not be used by the UE for transmission,
processing the received unused-resource indication to determine the at least one unused uplink radio resource.

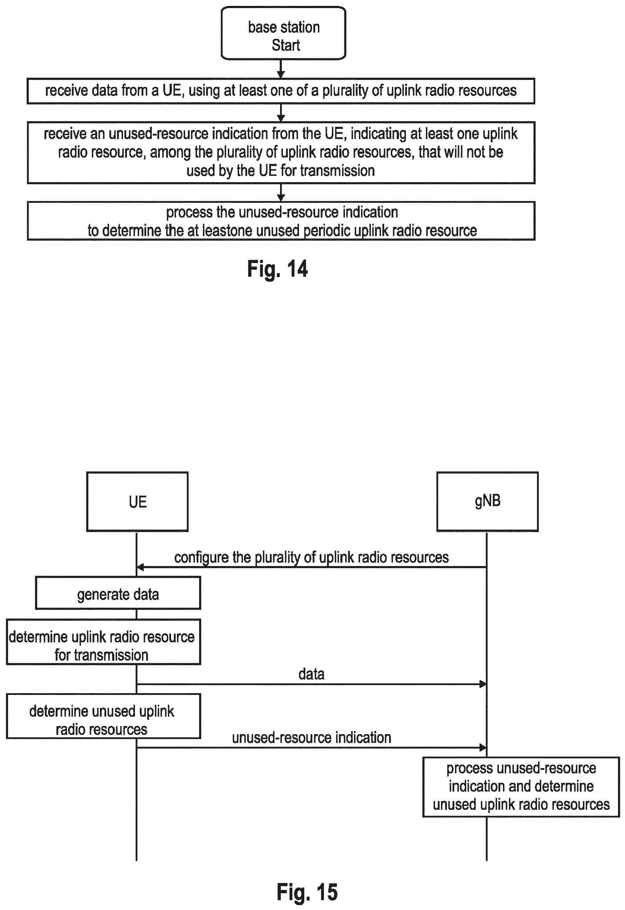

A corresponding sequence diagram for an exemplary base station behavior in line with the above-discussed base station and corresponding method is illustrated in **Fig. 14****.** The sequence diagram illustrates an exemplary and simplified implementation of the above presented base station method.

**Fig. 15** is a signaling diagram of an exemplary and simplified implementation of the improved transmission procedure, illustrating the exchange of messages between the different participating entities (here the UE and gNB) and the steps performed at these entities. The UE behaviour and gNB behaviour follow the above described UE and base station and the respective methods. Fig. 15 additionally illustrates how the base station configures the UE with the plurality of uplink radio resources, by transmitting a corresponding configuration message to the UE. Further, as mentioned already in connection with Fig. 11, the sequence order of steps at the UE side is exemplarily assumed as illustrated, but should be considered only exemplary and not limiting.

Different and exemplary implementations of the improved transmission procedure are explained in the following. For the explanation of the different implementation, some exemplary and simplifying assumptions are made.

According to one exemplary assumption, the data is data of a video frame or of a segment of a video frame. For example, the UE operates a video application, according to which video frames are generated with a video frame periodicity. Each video frame is generated within a jitter window having a jitter window length.

The solutions and their variants and implementations are primarily and exemplarily described on the basis of such a video stream scenario, according to which video frames are transmitted from the UE to the base station. In one example, the video application is an application for extended Reality (XR), as presented above for 5G NR.

However, this is only an example of a scenario to which the solutions can be applied. The solutions can also be applied to other scenarios than video frames, e.g. in scenarios in which data is exchanged with a varying periodicity, e.g. over a generating window (such as the jitter window for video frames) or with a varying size of the data to be transmitted. Other scenarios are for example the exchange of quasi-periodic data, including data from a monitoring or sensing application, such as smart-metering, environmental monitoring or agricultural monitoring.

Also in these scenarios, due to the varying size and/or varying generating time, there is an uncertainty that radio resources that had been scheduled for the UE for transmission of such data are sufficient in size or time to carry such data. In such scenarios, there might be an over-provision of radio resources that can lead to a waste of such resources. The improved transmission procedures described herein facilitate reducing the waste of such resources.

In the following, however, it is exemplarily assumed for ease of explanation that the UE and base station operate a video application, which involves the exchange of video frames in the downlink and/or uplink. The video frames are generated with a certain video frame periodicity that depends on the video application, e.g. based on the frame-per-second (fps) of the video stream, such as 60 fps, 90 fps, 120 fps or another suitable number. For the following information, a video stream with 60 fps is exemplarily assumed.

Moreover, it is also assumed that while the video frames as such are periodical (see above fps), the generation of the video frames is quasi-periodical and occurs at a point in time during a time window, here called exemplarily "jitter window".

Further, in the following explanations, it will be exemplarily assumed that the data can be transmitted by one uplink radio resource (e.g. one periodic uplink radio resource), so as to facilitate the illustration in the figures and the corresponding explanation of the concepts and ideas underlying the improved transmission procedures. However, such an assumption should not be considered to be limiting to the present invention. Rather, it is also possible that the data is too large such that more than one uplink radio resource (e.g. two or more periodic uplink radio resources) need to be used for transmitting the data.

Two solutions are differentiated below according to the present improved transmission procedure. The first solution applies to a case where the uplink radio resources for transmission of the data are periodic, e.g. configured by the base station in advance for the UE. The second solution applies to a case where the uplink radio resources for transmission of the data are not periodic, e.g. are dynamically allocated to the UE by the base station.

### First Solution - Periodic uplink radio resources

As mentioned above, the first solution focuses on the case where the uplink radio resources for transmission of the data are periodic, e.g. configured by the base station in advance for the UE. According to one example, a plurality of such periodic uplink radio resources are configured by corresponding one or more periodic-uplink-resource configurations, transmitted by the base station to the UE.

Each of these configurations configures periodic uplink radio resources that are usable by the UE to transmit the data to the base station. These periodic uplink radio resources can relate to an uplink shared channel (such as the PUSCH) or to an uplink control channel (such as the PUCCH). The unused-resource indication can thus be transmitted on part of the periodic uplink radio resources, available to the UE (e.g. part of the periodic PUSCH resource, or part of the periodic PUCCH resource).

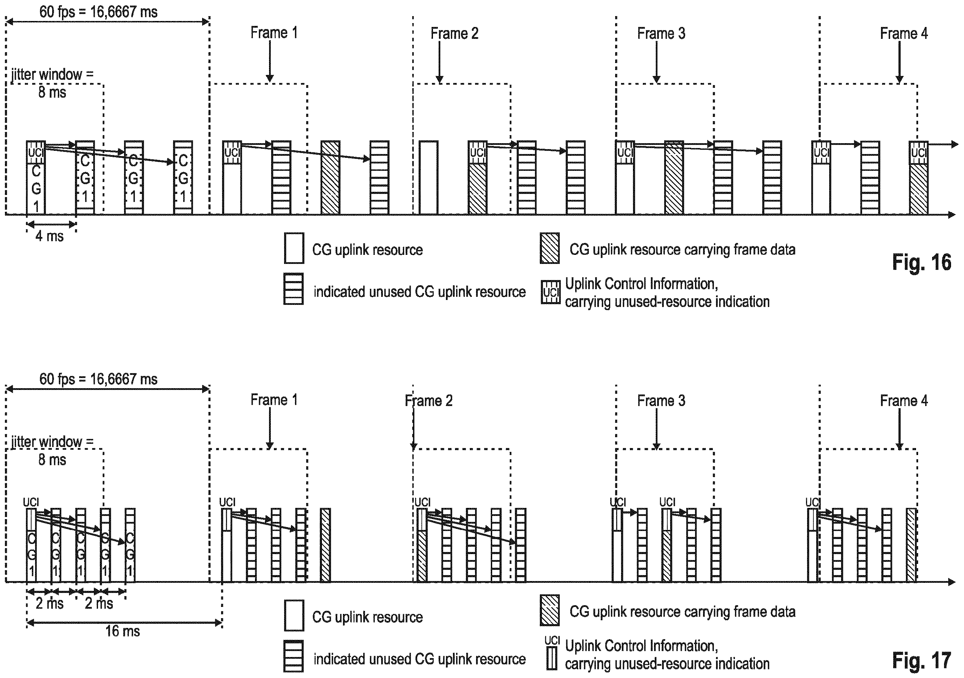

The present improved transmission procedure is applicable to configurations of periodic uplink radio resources, where one periodic uplink radio resource is configured by one configuration (see e.g. Fig. 8 and Fig. 16) and also where plural periodic uplink radio resources are configured by one configuration (see e.g. Fig. 9 and Fig. 17). Fig. 16 illustrates how the improved transmission procedure is applied to a configuration, which configures only one periodic uplink radio resource, while the remaining figures are exemplarily assuming that the configuration configures more than one periodic uplink radio resources. However, it should be noted that also the variants and implementations described in connection with scenarios involving a configuration of plural periodic uplink radio resources can be applied to other scenarios involving the configuration of only one periodic uplink radio resource.

According to one exemplary 5G-compliant implementation, the gNB can configure the UE with periodic uplink radio resources based on a configured grant, CG, e.g. following the Type 1 or Type 2 CG mechanisms as described above, e.g. using the higher-layer parameter *ConfiguredGrantConfig*; see also corresponding sections of 3GPP TS 38.300, 3GPP 38.331 cited above.

In line with the discussions above with respect to Fig. 11-15, the UE performs the steps for being able to transmit video frame data to the base station using one or more of the configured periodic uplink radio resources. According to the improved transmission procedure, the determination of which periodic uplink resource to use for the transmission of the video frame data may additionally be limited by a previous determination of one or more unused radio resources to be indicated to the base station (see e.g. Fig. 16, Frame 1). For instance, even before the generation of data at the UE, the UE might determine that one or more periodic radio resources will not be used for transmission (and correspondingly reports this to the base station), with the consequence that these indicated unused periodic radio resources will not be available for the UE for transmission of the video frame data.

**Fig. 16** illustrates how 4 video frames arrive at different times within the respective jitter windows and are then transmitted by available periodic uplink resources. Fig. 16 has similar assumptions for the generation and transmission of the data as in Fig. 8, e.g. including a video frame generation periodicity of 16,6667 ms, a jitter window size of 8 ms. Further, the periodic uplink radio resources are configured by defining one periodic uplink radio resource with an exemplary periodicity of 4 ms (e.g. using one periodic-uplink-resource configuration, denoted CG1). Fig. 16 in addition illustrates the transmission of the unused-resource indication and further illustrates, by using arrows, for which periodic uplink radio resources the unused-resource indication indicates the unused state.

Fig. 16 illustrates the different states / uses of the periodic uplink radio resources as follows. Unused periodic uplink resources, which unused state however is not reported to the base station, are illustrated with empty boxes. Unused periodic uplink resources, which unused state is reported to the base station, are illustrated with horizontally-striped boxes. Periodic uplink resources used for transmitting video frame data are illustrated with inclined striped boxes. Further, the transmission of the unused-resource indication is exemplarily illustrated as being part of uplink control information (UCI) and illustrated within a periodic uplink radio resource using vertically-striped boxes.

With respect to Frame 1, the UE may perform the determination of unused periodic radio resources at an early point in time, and determines that the next and the third-next periodic uplink radio resources will not be used for transmission and indicates the determination result to the base station. In this example, the UE might not know at which time the data of video Frame 1 will arrive, but simply assumes that it will at least arrive at the end of the jitter window and thus in time for the third periodic uplink radio resource. Correspondingly, the UE generates a suitable unused-resource indication and transmits it to the base station in the first periodic uplink radio resource within the jitter window of Frame 1.

With respect to Frame 2, the UE, after the generation of the data of Frame 2, the UE determines to use the next periodic uplink radio resource for transmitting the data (in this case the second periodic uplink resource within the jitter window for Frame 2). Further, the UE may determine that any remaining periodic uplink radio resources, until a possible generation of a subsequent video frame data, will not be used for transmission of the data of Frame 2. Correspondingly, those unnecessary periodic uplink radio resources can be indicated to the base station as being unused by the UE. To said end, the UE generates the unused-resource indication and transmits it together with the video frame data in the corresponding periodic uplink radio resource.

With respect to Frame 3, the UE again may perform the determination of unused periodic radio resources at an early point in time, and determines that the second-next and the third-next periodic uplink radio resources will not be used for transmission and indicates the determination result to the base station. Although not known at that point of time, the UE might have estimated the arrival time of Frame 3 and thus foreseen the use of the next periodic uplink resource for the transmission of the data of Frame 3.

With respect to Frame 4, the UE again may perform the determination of unused periodic radio resources at an early point in time. In this case, however, the UE may determine to indicate that only the next periodic uplink radio resource will not be used for transmission. The UE correspondingly transmits an unused-resource indication to the base station in a timely manner. Frame 4 arrives, and the UE can determine to use the next available periodic uplink resource for transmitting the data of Frame 4. Furthermore, the UE may again determine to indicate unused radio resources (e.g. the next two periodic uplink radio resources) and may transmit a corresponding unused-resource indication to the base station, e.g. together with the data for Frame 4.

With regard to the data-transmission-related steps, in the exemplary scenario of Fig. 16, the transmission of the data may occur e.g. immediately using the next available periodic radio resource (see e.g. Frame 2, Frame 3, Frame 4) or may be delayed by one or more periodic uplink radio resources (see e.g. Frame 1), also depending on whether the UE determines to indicate unused periodic radio resources and if so, depending on which periodic uplink radio resources will be determined to be unused.

Furthermore, in addition to these data-transmission-related steps, the UE performs the separate steps relating to the generation and transmission of the unused-resource indication, which first involves determining unused resources among the plurality of periodic uplink radio resources. As illustrated in Fig. 16, the unused-resource indication can be transmitted before the transmission (and even before the generation) of the video frame data (see Frame 1, Frame 3, Frame 4), the unused-resource indication can be transmitted together with the video frame data (see Frame 2, Frame 4). Furthermore, the unused-resource indication can also be transmitted more than one time in relation to video frame data (see Frame 4).

In either case, the base station receives the unused-resource indication and learns about the respectively unused periodic uplink resources. According to one example, the base station could then reschedule one or more of these indicated unused periodic uplink resources to other UEs. **Fig. 17** is similar to Fig. 16 in that it illustrates how 4 video frames arrive at different times within the respective jitter windows and are then transmitted by available CG uplink resources. Fig. 17 has similar assumptions for the generation and transmission of the data as in Fig. 16 and Fig. 9, including a video frame generation periodicity of 16,6667 ms, and a jitter window size of 8 ms. Furthermore, and in line with the assumptions for Fig. 9, it is exemplarily assumed that one active configuration (denoted CG1) configures a plurality of periodic uplink resources for use by the UE; here exemplarily a set of 5 periodic uplink resources are configured with a respective periodicity of 2 ms between each of the 5 periodic resources. The configuration defines as an example a periodicity of 16 ms between subsequent sets of periodic uplink radio resources, and thus can have a similar periodicity as the video frame periodicity.

Following similar concepts as explained above for Fig. 16, the UE can determine which periodic uplink radio resource to use for transmitting the data and can determine which periodic uplink radio resource to indicate to the base station as not being used.

According to one example, the unused-resource indication can be limited to the current set of periodic uplink radio resources, i.e. does not indicate unused periodic uplink resources from a subsequent set of periodic uplink radio resources (assumed for Fig. 17). However, according to other examples, the unused-resource indication can also indicate periodic uplink radio resources from the subsequent set (not assumed for Fig. 17).

As already explained in connection with Fig. 16, also for the improved transmission procedure performed in a scenario as illustrated in Fig. 17, the unused-resource indication can be transmitted before the transmission (and even before the generation) of the video frame data (see Frame 1, Frame 3, Frame 4), the unused-resource indication can be transmitted together with the video frame data (see Frame 2, Frame 3). Furthermore, the unused-resource indication can also be transmitted more than one time in relation to video frame data (see Frame 3).

In either case, the base station receives the unused-resource indication and learns about the respectively unused periodic uplink resources. According to one example, the base station could then reschedule one or more of these indicated unused periodic uplink resources to other UEs.

In the implementations and variants of the first solution explained in other parts herein, the unused-resource indication is described as indicating the determined periodic uplink radio resources that will not be used by the UE for transmission. Moreover, further implementations of the improved transmission procedure, which can be combined with any of the other described implementations, provide more details how the unused-resource indication can be implemented in detail.

There are different variants for how the unused-resource indication can indicate one or more periodic uplink radio resources that will not be used by the UE for transmission, including
- A bitmap
- Codepoint
- Start and duration
- Process ID for a retransmission feedback protocol

According to a first variant, the unused-resource indication includes a bitmap, wherein each bit of the bitmap is associated with one periodic uplink radio resource. One value of the bit of the bitmap indicates that the associated periodic uplink radio resource will not be used by the UE for transmission, e.g. the value "1". The other value of the bit of the bitmap (e.g. the value "0") indicates that the associated periodic uplink radio resource may possibly be used by the UE for transmission; it may or may not be used eventually by the UE for a transmission of data or uplink control information. In either case, such periodic uplink radio resources that are not indicated as being unused, are kept reserved for possible use by the UE, and the base station should not reschedule them but rather has to keep monitoring such periodic uplink radio resources in case the UE indeed uses them.

The length of the bitmap (i.e. the number of bits of the bitmap) can be one or more bits. According to one example, the bitmap has n bits, wherein n is an integer number greater than 0. A first bit of the n-bit bitmap is associated with the next available periodic uplink radio resource, a second bit of the n-bit bitmap is associated with the second-next available periodic uplink radio resource, and an n-th bit of the n-bit bitmap is associated with the n-th-next available periodic uplink radio resource. In this connection, the term "next" can be understood as referring to that periodic uplink radio resource being first directly after transmitting/receiving the unused-resource indication; the term "second-next" can be understood as referring to that periodic uplink radio resource being second after transmitting/receiving the unused-resource indication, etc.

This bitmap understanding can also be presented in the form of a table:

| **Bit number (order from left to right)** | **Indication** |
|---|---|
| Bit0=1 | Next available periodic uplink resource not used by UE |
| Bit1=1 | Second-next available periodic uplink resource not used by UE |
| Bit2=1 | Third-next available periodic uplink resource not used by UE |
| Bit3=1 | Fourth-next available periodic uplink resource not used by UE |

The structure of the bitmap and its length can also depend on the configuration of the periodic uplink radio resources. For instance, when assuming that one resource configuration is provided to configure the UE with a set of plural uplink periodic radio resources (see e.g. Fig. 17), the length of the bitmap can be the same, less or larger than the number of periodic uplink radio resources in the set (denoted "resource-set size" in the following). According to one example, the length of the bitmap can be set such that the UE is able to indicate all periodic uplink radio resources of the set; e.g. where the bitmap length is the same as or one bit less than the resource-set size.

When using less bits for the unused-resource bitmap than the resource-set size, less overhead is generated, but the flexibility to indicate the state for all possible periodic uplink radio resources of the set is reduced.

On the other hand, using more bits for the unused-resource bitmap than the current resource-set size might facilitate that the same type of unused-resource bitmap is re-used for larger resource-set sizes, even though some bits of the unused-resource bitmap might not be useful for the current resource-set size.

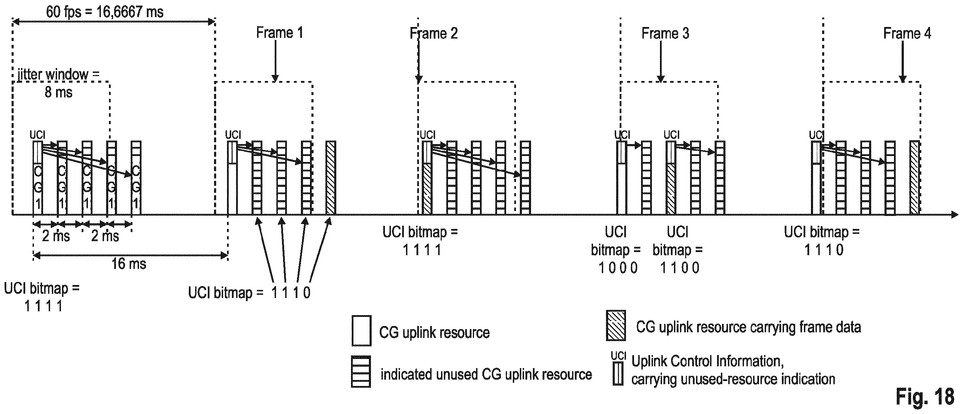

The use of a bitmap as the unused-resource indication will be exemplarily explained in connection with **Fig. 18**, which is almost the same as Fig. 17. Correspondingly, the same exemplary assumptions regarding the frame video generation and periodic uplink resource configuration are made as for Fig. 17 above. In addition, it is also assumed that the UE arrives at the same determination results as to which periodic uplink radio resources will be indicated as unused and as to which periodic uplink radio resources will be actually used for transmitting the video frame data.

Fig. 18 further illustrates the content of the bitmap for the unused-resource indication. In the present case, the order of the bitmap is assumed to start from the left, such that the left-most bit is associate with the next periodic uplink radio resource, etc. The association between the bits is illustrated in Fig. 18 only for Frame 1 for ease of illustration, but remains the same throughout Fig. 18.

However, a different order of the bitmap than the one assumed above for Fig. 18 is equally possible, e.g. the reverse order where the order of the bits starts from the right of the bitmap.

For Frame 1 the UE generates a bitmap of four bits having the values "1 1 1 0", thereby indicating that the next first, second and third periodic uplink radio resources will not be used by the UE for transmission. On the other hand, the next fourth periodic uplink radio resource is not indicated as unused (see value "0"), and is in fact then used to carry the video frame data. The base station is thus free to re-schedule the three periodic uplink radio resources that are indicated as unused, but is still able to receive the video frame data.

Similarly, for Frame 2, the UE generates a bitmap having the values "1 1 1 1", because the video frame data is transmitted in the first periodic uplink radio resource of the set, such that the four remaining periodic uplink resources of the set can be indicated as being unused.

With regard to Frame 3, the UE generates two unused-resource bitmaps, wherein the first bitmap is transmitted in the first periodic uplink resource of the set and has the value "1 0 0 0", thereby indicating only the next one periodic uplink resource as not being used. On the other hand, the next second, third and fourth bits of the unused-resource indication have the value "0", such that the associated periodic uplink resources may still be used for transmission by the UE. Actually, the UE uses the third periodic uplink resource of the set to transmit the video frame data and to transmit another unused-resource bitmap, e.g. having the value "1 1 0 0". Thereby, the first two bits (from the left) of the unused-resource bitmap indicate that the next one and the next second periodic uplink resources will not be used. In one example, the third and fourth bits of the bitmap may not be processed, because the set has no more periodic uplink resources to which the third and fourth bits may be associated (assumed for Fig. 18). According to another example, the third and fourth bits might already refer to the subsequent set of periodic uplink resources, in this case to the first two periodic uplink resources of the subsequent set (not assumed for Fig. 18). By using the value "0" for any bit of the bitmap for which there is no associated periodic uplink resource anymore in the current set, there is less risk that the base station misinterprets the bitmap and reschedules periodic uplink resources of the subsequent set.

With regard to Frame 4, the UE generates the same unused-resource bitmap as for Frame 1.

For the above bitmap variant, it was assumed that the first bit of the bitmap (e.g. left-most bit) is associated with the directly next periodic uplink resource after transmitting/receiving the unused-resource bitmap. However, such an association between the bits of the bitmap and the periodic uplink resources is just one example, and other associations are equally possible. As a further example, the first bit of the bitmap may be associated with the second-next periodic uplink resource. This has the benefit that the UE processing time and/or the base station processing time for the unused-resource indication will not negatively affect the procedure. In particular, sufficient time for processing the unused-resource indication is afforded by associating the first bit of the bitmap with the second-next periodic uplink resource (rather than with the first-next periodic uplink resource).

According to a second variant, the unused-resource indication includes a codepoint, with a value of one or more bits. This value of the codepoint encodes the information on which one or more periodic uplink resources will not be used by the UE for transmission. The UE determines the value of the codepoint based on a codepoint mapping and the determined unused periodic uplink resources. The codepoint mapping maps different values of the codepoint of the unused-resource indication to different candidates of unused periodic uplink radio resources.

In general, and as will become apparent from below, the use of a codepoint might allow to reduce the size of the unused-resource indication and thus reduces the overhead caused by its transmission. On the other hand, depending on how the codepoints are defined, it might not be possible to indicate the status "unused" / "possibly-used" for all periodic uplink resources.

There are numerous possibilities regarding the number and definition of the codepoint values for this second variant. According to a first example, a first codepoint value indicates that the next one periodic uplink radio resource will not be used by the UE, wherein a second codepoint indicates that the next two periodic uplink radio resources will not be used by the UE, wherein an m-th codepoint indicates that the next m periodic uplink radio resources will not be used by the UE. The parameter m is an integer number equal to or greater than 0.

Based on this codepoint understanding, one exemplary codepoint mapping is presented in the following table, assuming four different codepoint values when using 2 bits for the unused-resource indication:

| **Codepoint** | **Indication** |
|---|---|
| 00 | Next one periodic uplink resource is unused |
| 01 | Next two periodic uplink resources are unused |
| 10 | Next three periodic uplink resources are unused |
| 11 | Next four periodic uplink resources are unused |

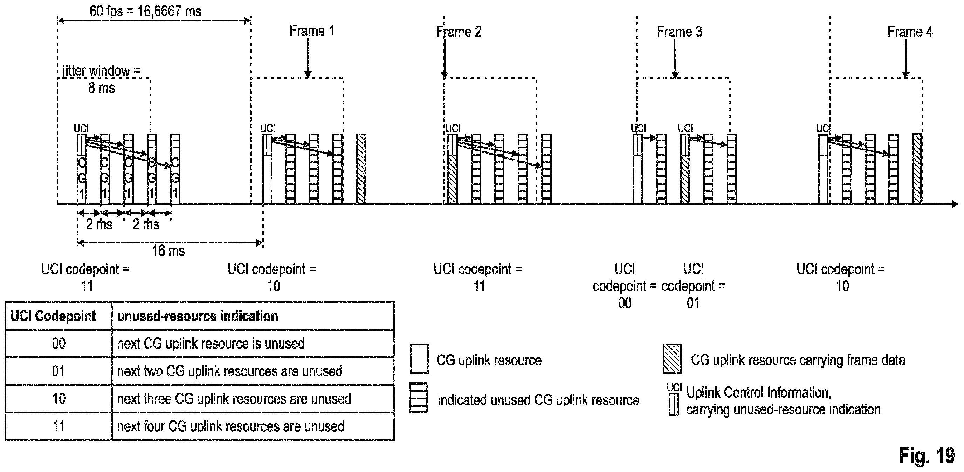

The use of such a codepoint as the unused-resource indication will be exemplarily explained in connection with **Fig. 19****,** which is quite similar to Fig. 17 and Fig. 18. Correspondingly, the same exemplary assumptions regarding the frame video generation and periodic uplink resource configuration are made as for Fig. 17 and Fig. 18 above. In addition, it is also assumed that the UE arrives at the same determination results as to which periodic radio resources will be indicated as unused and as to which periodic radio resources will be actually used for transmitting the video frame data.

Fig. 19 further illustrates the above codepoint mapping table and illustrates the codepoint value set by the UE for the respective unused-resource indications transmitted by the UE in connection with Frames 1, 2, 3, and 4.

In more detail, for Frame 1, the UE sets the codepoint value to 10, so as to reflect that the next three periodic uplink resources are to be indicated as unused. The data of Frame 1 is transmitted using the last periodic uplink resource of the current set.

For Frame 2, the UE transmits a codepoint value of 11, because the video frame data is transmitted in the first periodic uplink radio resource of the set, such that the four remaining periodic uplink resources of the set can be indicated as being unused.

With regard to Frame 3, the UE generates and transmits two unused-resource codepoints. The value of the first unused-resource codepoint is set to 00, so as to indicate that the next periodic uplink resource will not be used, while leaving open whether the subsequent second, third and fourth periodic uplink resources will be used or not for any transmission by the UE. Actually, the UE uses the third periodic uplink resource of the set to transmit the video frame data and to transmit another unused-resource codepoint, in this case with the value of 01, so as to reflect that the next two periodic uplink resources will not be used.

With regard to Frame 4, the UE generates the same unused-resource codepoint as for Frame 1.

According to a second example for a codepoint mapping, a first codepoint value indicates that the next x periodic uplink radio resources will not be used by the UE, wherein x is an integer number equal to or greater than 0. A second codepoint value of said codepoint mapping indicates that the next y-th and z-th periodic uplink radio resources will not be used by the UE, wherein y and z are integer numbers greater than 0. A third codepoint value of said codepoint mapping indicates that all periodic uplink radio resources may possibly be used by the UE.

Based on this codepoint understanding, one exemplary codepoint mapping is presented in the following table, assuming four different codepoint values when using 2 bits for the unused-resource indication:

| **Codepoint** | **Indication** |
|---|---|
| 00 | All next four available periodic resources may be used |
| 01 | Next first and second periodic uplink resources are unused |
| 10 | Next third and fourth periodic uplink resources are unused |
| 11 | All next four available periodic resources are unused |

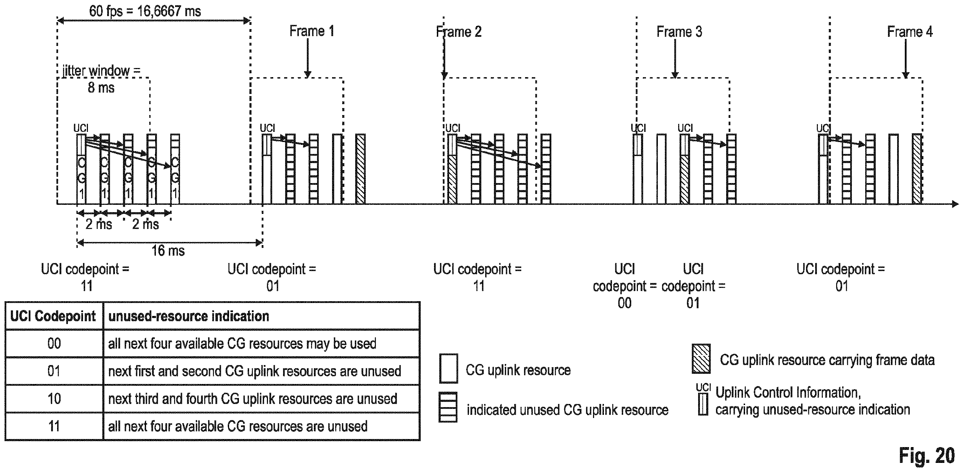

The use of such a codepoint as the unused-resource indication will be exemplarily explained in connection with **Fig. 20****,** which is quite similar to previous Fig. 17, Fig. 18 and Fig. 19. Correspondingly, the same exemplary assumptions regarding the frame video generation and periodic uplink resource configuration are made as for Fig. 17, Fig. 18 and Fig. 19 above. In addition, it is also assumed that the UE arrives at the same determination results as to which periodic radio resources will be actually used for transmitting the video frame data.

On the other hand, the UE arrives at different determination results with respect to which periodic uplink radio resources will be indicated as unused, because said determination is also limited by the available codepoint definitions (see above table). For instance, compared to the previous codepoint mapping of the first example, the current codepoint mapping does not allow to indicate that (only) the next one periodic uplink resource is unused and does not allow to indicate that the next three periodic uplink resources are unused.

Fig. 20 further illustrates the above codepoint mapping table and illustrates the codepoint value set by the UE for the respective unused-resource indications transmitted by the UE in connection with Frames 1, 2, 3, and 4.

In more detail, for Frame 1, the UE sets the codepoint value of the unused-resource indication transmitted in the first periodic uplink resource of the set to "01", so as to reflect that the next first and second periodic uplink resources are unused. As a result, the fourth periodic uplink resource of the set cannot be indicated as being unused by said unused-resource indication in the first periodic uplink resource. The data of Frame 1 is transmitted using the last periodic uplink resource of the current set.

For Frame 2, the UE transmits a codepoint value of "11", because the video frame data is transmitted in the first periodic uplink radio resource of the set, such that the four remaining periodic uplink resources of the set can be indicated as being unused.

For Frame 3, the UE generates and transmits two unused-resource codepoints. The first value of the first unused-resource codepoint is set to "00" by the UE, so as to reflect that all the subsequent periodic uplink resources may still be used by the UE for transmission. It should be noted here that the UE cannot indicate that only the next one periodic uplink resource will not be used, due to that a suitable codepoint value is not defined to reflect such an indication. The UE uses the third periodic uplink resource of the set to transmit the video frame data and to transmit another unused-resource codepoint, in this case with the value of "01", so as to reflect that the next first and next second periodic uplink resources will not be used.

With regard to Frame 4, the UE generates the same unused-resource codepoint as for Frame 1.

In the above second variant using a codepoint, different codepoint mappings were discussed. According to one example, the codepoint mapping can be defined by the base station and transmitted to the UE, e.g. using a message of the RRC protocol. Alternatively, the codepoint mapping can be defined by the UE and transmitted to the base station. Still alternatively, the codepoint mapping can be predefined e.g. in a 3GPP standard or by a network operator, such that the codepoint mapping is already available at the UE and the base station without a prior message exchange.

According to a third variant, the unused-resource indication indicates a periodic uplink radio resource as a start of a sequence of one or more unused periodic uplink resources and further indicates a duration of the sequence. For instance, the UE determines the value of the start-duration indication based on a start-duration mapping and the determined unused periodic uplink resources. The start-duration mapping maps different values of the unused-resource indication to different combinations of possible starts and durations of a sequence of one or more unused periodic uplink radio resources.

In general, and as will become apparent from below, indicating the start and duration of a sequence of unused periodic uplink resources might allow to reduce the size of the unused-resource indication and thus reduces the overhead caused by the transmission of the indication. On the other hand, because such an unused-resource indication can only indicate a sequence, it is not possible to indicate alternating periodic resources (such as the first and third next periodic uplink resource). Therefore, depending on the circumstances, it might not be possible to indicate the status "unused" / "possibly-used" as flexible as with the bitmap solution.

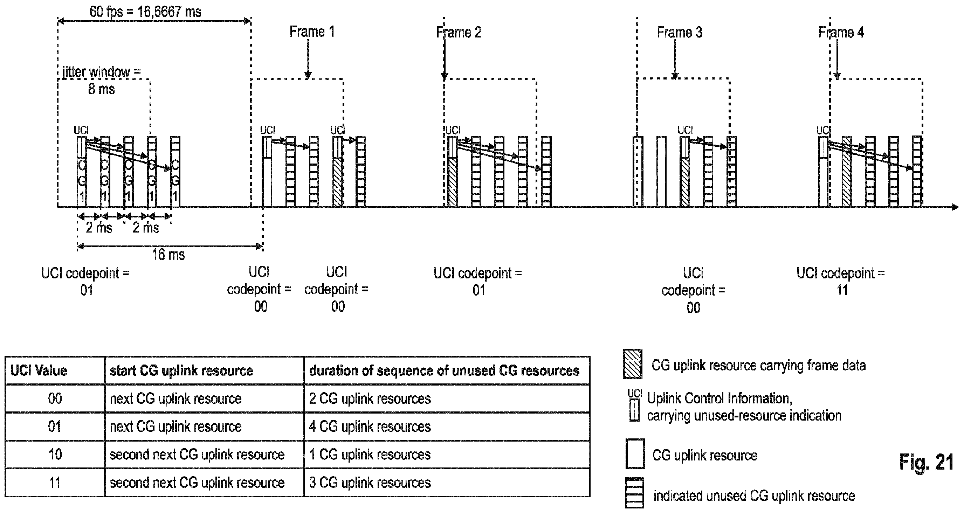

There are numerous possibilities regarding the number and definition of the starts and durations for this third variant. One example is based on indicating the duration of the sequence as a number of periodic uplink radio resources (see below table and Fig. 21). Alternatively, the duration can be indicated in unit of time, e.g. a number of ms or in a unit of frames, subframes, slots etc.

Based on this understanding, one exemplary start-duration mapping is presented in the following table, assuming four different values when using 2 bits for the unused-resource indication:

| **Codepoint** | **Start uplink resource** | **Duration of sequence of unused resources** |
|---|---|---|
| 00 | Next periodic uplink resource | 2 periodic uplink resources |
| 01 | Next periodic uplink resource | 4 periodic uplink resources |
| 10 | Second-next periodic uplink resource | 1 periodic uplink resources |
| 11 | Second-next periodic uplink resource | 3 periodic uplink resources |

The use of such a codepoint as the unused-resource indication will be exemplarily explained in connection with **Fig. 21****,** which is quite similar to previous Fig. 17, Fig. 18, Fig. 19 and Fig. 20. Correspondingly, the same exemplary assumptions regarding the frame video generation and periodic uplink resource configuration are made as for Fig. 17, Fig. 18, Fig. 19 and Fig. 20 above. On the other hand, the UE arrives at different determination results as to which periodic uplink radio resources will be indicated as unused and as to which periodic uplink radio resources will be used for transmitting the video frame data.

Fig. 21 further illustrates the above start-duration mapping table and illustrates the value set by the UE for the respective unused-resource indications transmitted by the UE in connection with Frames 1, 2, 3, and 4.

In particular, for Frame, 1, the UE sets the value of the unused-resource indication to the value "00", which encodes a start of "next periodic uplink resource" and a duration of "2 periodic uplink resources". Correspondingly, the sequence of unused periodic uplink resources starts with the next periodic uplink resource after the unused-resource indication is transmitted/received and lasts for a duration of 2 periodic uplink resources. The UE uses the fourth periodic uplink resource of the set to transmit the video frame data and to transmit another unused-resource indication. For this second unused-resource indication for Frame 1, the UE may indicate that the remaining one periodic uplink resource will not be used, and in the absence of a more accurate value, the UE set the value of "00", so as to reflect that the next two periodic uplink resources will not be used. It is assumed herewith, that the unused-resource indication is limited to the current set of periodic uplink radio resources, i.e. does not indicate unused periodic uplink resources from a subsequent set of periodic uplink radio resources. However, even though not assumed for the exemplary implementation as illustrated for Fig. 21, the unused-resource indication according to this third variant can also indicate periodic uplink radio resources from the subsequent set.

For Frame 2, the UE sets the value of the unused-resource indication to the value of "01 ", because the video frame data is transmitted in the first periodic uplink radio resource of the set, such that the four remaining periodic uplink resources of the set can be indicated as being unused.

For Frame 3, the UE transmits the video frame data in the third periodic uplink radio resource of the set, together with the unused-resource indications which is set to the value of "00", encoding a start of "next periodic uplink resource" and a duration of "2 periodic uplink resources". Correspondingly, the sequence of unused periodic uplink resources starts with the next periodic uplink resource after the unused-resource indication is transmitted/received and lasts for a duration of 2 periodic uplink resources.

For Frame 4, the UE transmits the video frame data in the second periodic uplink resource of the set. Furthermore, the UE had already determined in advance that the third, fourth and fifth periodic uplink resources of the set will not be used. The value of the unused-resource indication is thus set by the UE to "11", encoding a start of "second next periodic uplink resource" and a duration of "3 periodic uplink resources". Consequently, by transmitting the unused-resource indication in the first periodic uplink resource of the set, the indication indicates the third, fourth and fifth periodic uplink resources of the set will not be used.

For the above start-duration variant, different start-duration mappings were discussed. According to one example, the start-duration mapping can be defined by the base station and transmitted to the UE, e.g. using a message of the RRC protocol. Alternatively, the start-duration mapping can be defined by the UE and transmitted to the base station. Still alternatively, the start-duration mapping can be predefined e.g. in a 3GPP standard or by a network operator, such that the start-duration mapping is already available at the UE and the base station without a prior message exchange.

According to a fourth variant, the unused-resource indication indicates one or more process IDs of a retransmission feedback protocol used for the exchange of the video frame data with the base station. Correspondingly, the unused-resource indication may include a list of process IDs.

Each one retransmission feedback protocol process is associated with one of the periodic uplink radio resources, such that there is a one-to-one relationship and such that the unused-resource indication is able to indicate which periodic uplink radio resources will not be used.

According to an exemplary 5G-compliant example of said fourth variant, the retransmission feedback protocol process is a Hybrid-automatic repeat request, HARQ, process.

In the implementations and variants of the first solution explained in other parts herein, the improved transmission procedure was based on the assumption of one periodic-uplink-resource configuration defining the periodic uplink resources. Further implementations of the improved transmission procedure, which can be combined with any of the other described implementations, are provided for handling more than one periodic-uplink-resource configurations. The following explanations are described for two periodic-uplink-resource configurations only, as an example and for ease of illustration. However, the same concepts described in the following can be applied to scenarios in which a UE is configured with three or more periodic-uplink-resource configurations.

Accordingly, the unused-resource indication can indicate periodic uplink radio resources from several periodic-uplink-resource configurations that will not be used by the UE for transmission. In said respect, the UE can determine the unused periodic uplink resources for all or only some of the periodic-uplink-resource configurations.

According to one example, the unused-resource indication includes different parts, wherein each part is associated with a different one of the plural periodic-uplink-resource configurations and correspondingly indicates the unused periodic uplink resources of said respective configuration.

In one example, the number of parts of the unused-resource indication is the same as the number of periodic-uplink-resource configurations with which the UE is configured, which has the benefit that the unused-resource indication is able to indicate unused periodic uplink resources for all configurations. On the other hand, it is also possible that the number of parts of the unused-resource indication is smaller or larger than the number of periodic-uplink-resource configurations with which the UE is configured.

Exemplary, the unused-resource indication can be defined such that there is a one-to-one association between one part of the unused-resource indication and the corresponding periodic-uplink-resource configuration, e.g. based on the order of the parts or based on an identification included in the unused-resource indication. Accordingly, the association would be independent from the periodic-uplink-resource configuration, which uplink radio resources are used for transmitting the unused-resource indication.

As a further example, one part of the unused-resource indication (e.g. the first part) refers to the current periodic-uplink-resource configuration, in whose periodic uplink resource the unused-resource indication is transmitted. Correspondingly, another part of the unused-resource indication (e.g. the second part) refers to another periodic-uplink-resource configuration, etc.

Moreover, the content of each part of the unused-resource indication can be based on any of the above discussed variants for how the unused-resource indication can indicate one or more periodic uplink radio resources that will not be used by the UE for transmission, including using a bitmap, using a codepoint, using start and duration, and using a process ID for a retransmission feedback protocol.

The following example is exemplarily based on the use of a codepoint. Based on this understanding, one exemplary definition of the unused-resource indication is presented in the following table, assuming four different values when using 2 bits for the unused-resource indication for each part:

| **Part** | **Codepoint** | **Indication** |
|---|---|---|
| 0 (current periodic-uplink-resource configuration) | 00xx | No indication of unused periodic uplink resources |
| | 01xx | Next one periodic uplink resource is unused |
| | 10xx | Next two periodic uplink resources are unused |
| | 11xx | Next three periodic uplink resources are unused |
| 1 (other periodic-uplink-resource configuration) | xx00 | No indication of unused periodic uplink resources |
| | xx01 | Next one periodic uplink resource is unused |
| | xx10 | Next two periodic uplink resources are unused |
| | xx11 | Next three periodic uplink resources are unused |

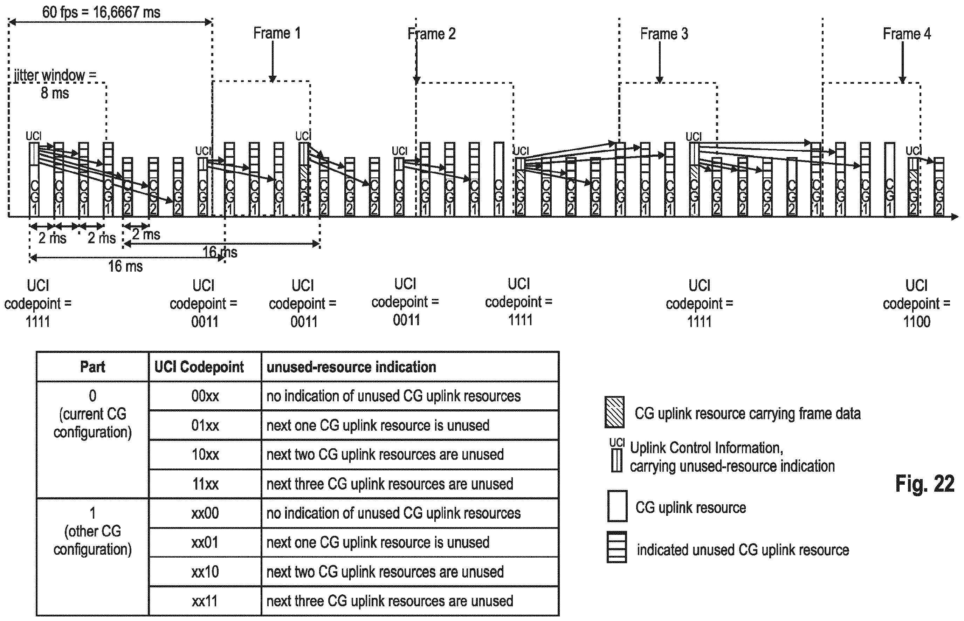

The use of such a codepoint as the unused-resource indication will be exemplarily explained in connection with **Fig. 22****.** The same exemplary assumptions regarding the frame video generation are made as for Fig. 17 and Fig. 18 above. On the other hand, it is exemplarily assumed that the UE is configured with two active periodic-uplink-resource configurations (denoted as CG1, and CG2), each of which configures a set of plural periodic uplink resources for use by the UE; here exemplarily a set of 4 periodic uplink resources are configured with a respective periodicity of 2 ms between each of the 4 periodic uplink resources. The configuration defines as an example a periodicity of e.g. 16 ms between subsequent sets of periodic uplink radio resources for both CG1 and CG2, and thus a similar periodicity as the video frame periodicity. Fig. 22 further illustrates the content of the unused-resource indication for each transmission of the unused-resource indication.

In particular, before Frame 1, the UE wants to indicate as many periodic uplink resources to be unused as possible and correspondingly transmits an unused-resource indication including the codepoint "1111". The first part "11" (from the left) indicates that the next three uplink resources of the current periodic-uplink-resource configuration (here CG1, considering that the unused-resource indication is transmitted in a periodic uplink resource of CG1) will not be used by the UE. The second part "11" indicates that the next three uplink resources of the other periodic-uplink-resource configuration (here CG2) will not be used by the UE.

For Frame 1, the last periodic uplink resource for CG2 of the previous set is used by the UE to transmit another unused-resource indication including the codepoint "0011". The first part "00" refers to the current periodic-uplink-resource configuration (here CG2) and reflects that no periodic uplink resources of said CG2 are indicated as unused. The second part "11" indicates that the next three uplink resources of the other periodic-uplink-resource configuration (here CG1) will not be used by the UE. As a parent therefrom, it is exemplarily assumed that an unused-resource indication, transmitted within one set of periodic uplink radio resources, can indicate unused periodic uplink resources for subsequent set(s) of periodic uplink radio resources. Furthermore, the unused-resource indication in the example of Frame 1 only indicates unused periodic resources for the other periodic-uplink-resource configuration (here CG1) but not for the current periodic-uplink-resource configuration (here CG2).

The data of video Frame 1 is transmitted using the fourth periodic uplink resource of the set of CG1, together with yet another unused-resource indication, again including the codepoint "0011". Said codepoint "0011" indicates that the next three periodic uplink resources of the other periodic-uplink-resource configuration (here CG2) will not be used by the UE.

Right before the jitter window for Frame 2, the UE transmits an unused-resource indication in the same manner as for Frame 1, already explained above. The data of video Frame 2 is transmitted using the first periodic uplink resource of the set of CG2, together with another unused-resource indication, including the codepoint "1111". The respective codepoints "11" indicate that the next three uplink resources of the both the current and the other periodic-uplink-resource configurations will not be used by the UE.

The data of video Frame 3 is transmitted using the next available periodic uplink resource, which is the fourth periodic uplink resource of the set of CG1, because the third one of the CG1 set had already been indicated as not being used. An unused-resource indication is also transmitted, including the codepoint "1111 ", which indicates that the next three periodic uplink resources of the both the current and the other periodic-uplink-resource configurations will not be used by the UE.

The data of video Frame 4 is transmitted using the next available periodic uplink resource, which is the first periodic uplink resource of the set of CG2, together with an unused-resource indication carrying the code point "1100".

Further implementations of the improved transmission procedure, which can be combined with any of the other described implementations, are provided so as to reduce the overhead caused by the transmission of the unused-resource indication. In particular, the size of the unused-resource indication is adjusted according to a set position, within the set of periodic uplink resources, at which the unused-resource indication is transmitted. In one example, the latter the set position at which the unused-resource indication is transmitted, the smaller the size of the unused-resource indication, because less periodic uplink resources can be indicated as unused.

This reduction of the size of the unused-resource indication can be applied to any of the above discussed variants for how the unused-resource indication can indicate one or more periodic uplink radio resources that will not be used by the UE for transmission, including using a bitmap, using a codepoint, using start and duration, and using a process ID for a retransmission feedback protocol.

This dependency of the size of the unused-resource indication is also known to the base station, which thus can properly receive and process the unused-resource indication with the adaptive size.

The following example is based on the use of a bitmap. It is further exemplary assumed that the UE is configured with a set of plural periodic uplink resource by one configuration, one of which will be used for transmitting the unused-resource indication. It is further exemplary assumed that the set includes 5 periodic uplink resources. The following table illustrates the dependence of the size of the unused-resource indication from the set position of the periodic uplink resource used for transmitting the unused-resource indication:

| **Set position** | **Size of unused-resource bitmap** |
|---|---|
| First periodic uplink resource in set | 4 bits |
| Second periodic uplink resource in set | 3 bits |
| Third periodic uplink resource in set | 2 bits |
| Fourth periodic uplink resource in set | 1 bit |

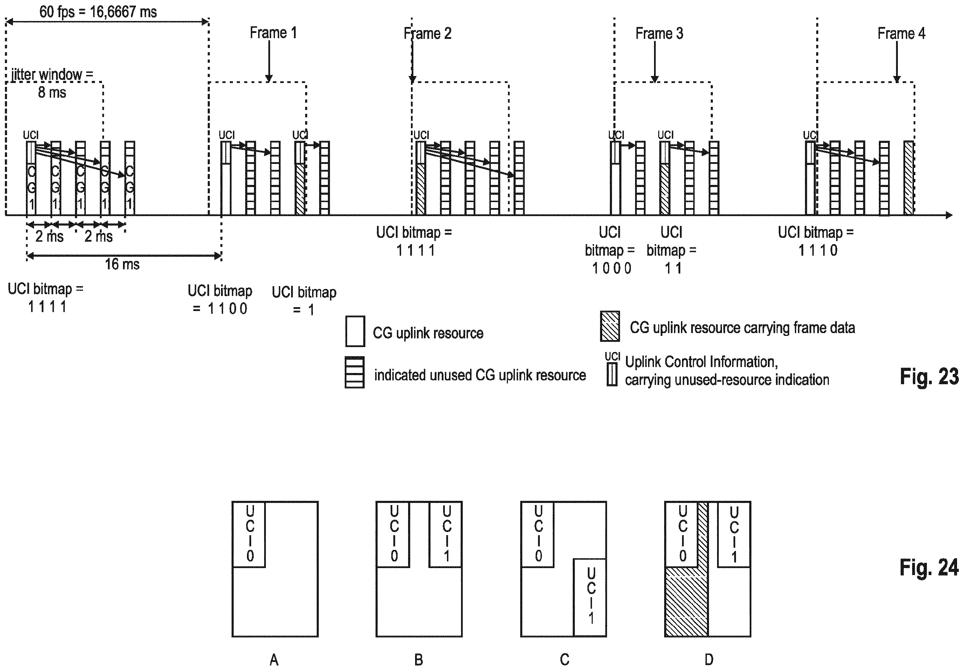

The use of such an adaptive size of the unused-resource bitmap is exemplarily illustrated in connection with **Fig. 23****,** which is quite similar to Fig. 18. The same exemplary assumptions regarding the frame video generation and periodic uplink resource configuration are made as for Fig. 18. Fig. 23 further illustrates the content of the bitmap for the unused-resource indication, following the same principles as explained in connection with Fig. 18, but additionally reducing the size of the unused-resource bitmap as follows.

For Frame 1, the UE transmits the unused-resource bitmap in the first periodic uplink resource of the set, such that the size of the bitmap is four bits, i.e. one bit for each of the remaining periodic uplink resources of the set. In Fig. 23, it is assumed that the data of Frame 1 is transmitted in the fourth periodic uplink resource of the set together with yet another unused-resource indication. This second unused-resource indication is transmitted in the fourth periodic uplink resource and thus has the size of 1 bit in order to be able to provide an indication for the remaining one periodic uplink resource of the set. In the present case, the one bit unused-resource indication carries the value "1" to indicate that that last periodic uplink resource of the set will not be used by the UE.

Also, the unused-resource indications transmitted in the respective first position of the sets for Frames 2, 3 and 4 have a length of 4 bits.

For Frame 3, the UE transmits an unused-resource indication in the third periodic uplink resource of said set, having a size of two bits and the value "1 1" so as to indicate that the following two periodic uplink resources will not be used by the UE.

Further implementations of the improved transmission procedure, which can be combined with any of the other described implementations, will be explained in the following according to which uplink control information (UCI) regarding the unused-resource indication is transmitted in two parts. The first part of the UCI includes information on whether the unused-resource indication is transmitted. The second part of the UCI then may include the unused-resource indication.

In one example, the first UCI part is transmitted in the same periodic uplink radio resource as the second UCI part. The two UCI parts are transmitted at different parts of said periodic uplink radio resource, e.g. at different OFDM symbols and/or at different frequency bands. For instance, the first UCI part can be transmitted at the initial OFDM symbols of the periodic uplink resource, while the second UCI part can be transmitted at the end OFDM symbols of the periodic uplink resource. **Fig. 24** illustrates schematically periodic uplink resources, with different scenarios A, B, C for transmitting the first UCI part and possibly the second UCI part. In the scenario A, a first UCI part UCI0 is transmitted at the beginning of the periodic uplink resource. The first UCI part UCI0 indicates that there is no second UCI part UCI1 (and thus no unused-resource indication).

In the scenario B, the first UCI part UCI0 indicates that there is a second UCI part UCI1 (and thus an unused-resource indication), which is transmitted at the end of the periodic uplink resource.

The scenarios C and D is quite similar to scenario B in that the first UCI part UCI0 indicates that there is a second UCI part UCI1. The second UCI part UCI1 has however a larger size and is transmitted at a different position of the periodic uplink resource, compared to scenario B.

Correspondingly, the first part of the UCI can be quite small, e.g. only one bit, sufficient to be able to indicate the existence of the unused-resource indication in the second part of the UCI.

According to further beneficial implementations, the first part of the UCI can include other information, in addition to the information on whether the unused-resource indication is transmitted in the second part of the UCI or not. In particular, the first part of the uplink control information may further indicate on one or more of:
- a size of the unused-resource indication,
- a coding rate with which the unused-resource indication is coded,
- a modulation scheme with which the unused-resource indication is modulated,
- a frequency band and an Orthogonal Frequency Division Multiplexing, OFDM, symbol carrying the second part of the uplink control information,
- whether the periodic uplink radio resource carrying the first part of the uplink control information also carries the data,
- a coding rate with which the transmitted data is coded,
- a modulation scheme with which the transmitted data is modulated,
- the amount of the periodic uplink radio resource being used for transmitting the data, and
- a transport block size of the transmitted data.

In more detail, indicating the size of the unused-resource indication can be beneficial for facilitating the processing of the second UCI part at the base station side, particularly in scenarios where the size of the unused-resource indication may vary.

Further, indicating the coding and/or modulation scheme of the unused-resource indication allows the UE to use a different coding rate and modulation scheme than initially configured, e.g. depending on the channel quality, e.g. using a more robust coding rate or modulation scheme in case of a good channel quality.

Similarly, indicating the coding and/or modulation scheme of the data allows the UE to use a different coding rate and modulation scheme than initially configured.

Furthermore, the first UCI part may also indicate the position of the second UCI part in the periodic radio resource, e.g. indicating the frequency band and/or OFDM symbol(s) carrying the second UCI part. This increases the flexibility of transmitting the second UCI part in the periodic uplink resource.

The first UCI part may also indicate whether the current periodic uplink resource also carries the data, e.g. of a video frame. In addition, the periodic uplink resource may not be fully used for carrying the amount of data. In that case, the first UCI part may also provide information on the amount of the periodic uplink resource used for transmitting the data. The used part of the periodic uplink resource can be indicated e.g. by use of the transport block size of the transmitted data or by indicating a percentage or fraction (e.g. 1, ½, 1/3, ¼, etc.).

**Fig. 24****,** part D thereof, illustrates that only a part of the periodic uplink resource is used to carry the data, here exemplarily half of the periodic uplink resource. Corresponding, the first UCI part might indicate this partial use of the periodic uplink resource, e.g. by indicating the value ½.

The additional information listed above can be either indicated separately in the unused-resource indication (e.g. one or more bits per item of information), or one or more of these additional information items can be indicated together (i.e. in combination, e.g. one codepoint of one or more bits indicates two or more items of information)

The bits of the first UCI part can be defined in many different ways, of which only a few will be exemplified in the following.

| **UCI0** | **Indication** |
|---|---|
| 0 | UCI1 is not transmitted in current periodic uplink resource |
| 1 | UCI1 is transmitted in current periodic uplink resource |

Accordingly, the UCI0 only differentiates between whether the second UCI part is transmitted or not in the current periodic uplink resource.

| **UCI0** | **Indication** |
|---|---|
| 00 | Data is not transmitted and UCI1 is not transmitted in current periodic uplink resource |
| 01 | Data is not transmitted and UCI1 is transmitted in current periodic uplink resource |
| 10 | Data is transmitted and UCI1 is not transmitted in current periodic uplink resource |
| 11 | Data is transmitted and UCI1 is transmitted in current periodic uplink resource |

Accordingly, the second bit "x0" or "x1" of the UCI0 part differentiates between whether the second UCI part is transmitted or not in the current periodic uplink resource. The first bit "0x" and "1x" of the UCI0 part differentiates whether data is transmitted or not in the current periodic uplink resource.

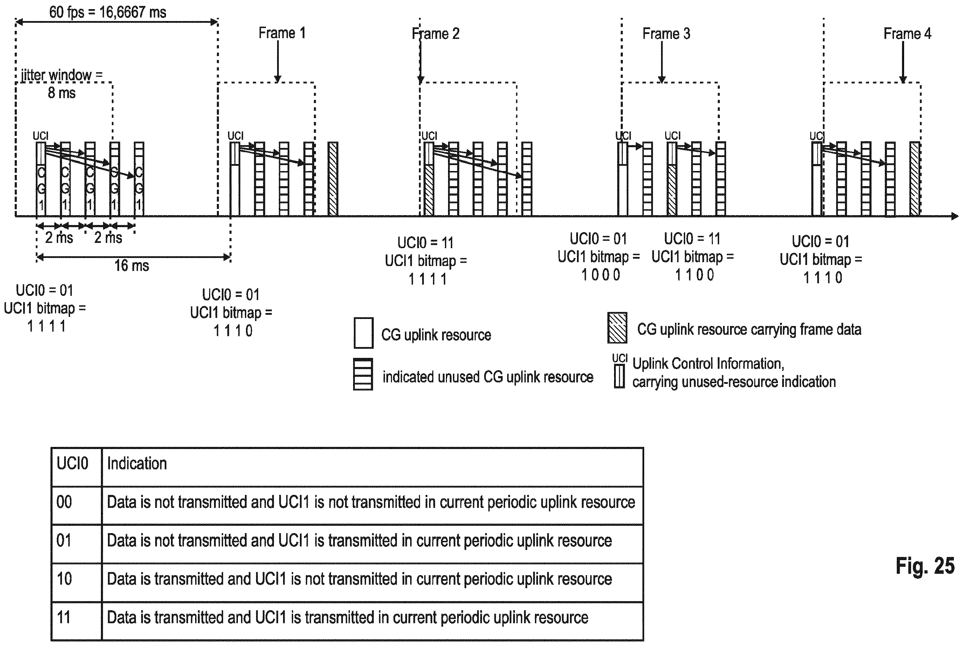

This example mapping of UCI0 is illustrated in **Fig. 25**, which is quite similar to Fig. 18. The same exemplary assumptions regarding the frame video generation and periodic uplink resource configuration are made as for Fig. 18. Fig. 25 further illustrates the content of the two parts of the UCI, UCI0 and UCI1, wherein UCI1 indicates the bitmap for the unused-resource indication, following the same principles as explained in connection with Fig. 18.

In particular, before Frame 1 and for Frame 1, the UE transmits the UCI0 having a value of "01", thus indicating to the base station that no data is transmitted in the current periodic uplink resource, but that the second UCI1 part with the unused-resource indication is indeed transmitted. The second UCI1 part in this example includes a bitmap with suitable values to indicate unused periodic uplink resources.

For Frame 2, the UE transmits data as well as the unused-resource indication in the same periodic uplink resource. Correspondingly, UCI0 is set to the value "11", and the UCI1 part includes a bitmap with the value "1111", thereby indicating that the next first, second, third and fourth periodic uplink resources of the set will not be used by the UE.

The UCI0 and UCI1 for Frame 3 and Frame 4 of Fig. 25 are correspondingly set by the UE following the above principles.

Another exemplary way to define the bits of the first UCI part is as follows:

| **UCI0** | **Indication** |
|---|---|
| 000 | Data is not transmitted and UCI1 is not transmitted in current periodic uplink resource |
| 001 | Data is not transmitted and UCI1 of 1-bit size is transmitted in current periodic uplink resource |
| 010 | Data is not transmitted and UCI1 of 2-bit size is transmitted in current periodic uplink resource |
| 011 | Data is not transmitted and UCI1 of 3-bit size is transmitted in current periodic uplink resource |
| 100 | Data is transmitted and UCI1 of 1-bit size is transmitted in current periodic uplink resource |
| 110 | Data is transmitted and UCI1 of 2-bit size is transmitted in current periodic uplink resource |
| 111 | Data is transmitted and UCI1 of 3-bit size is transmitted in current periodic uplink resource |

Accordingly, different codepoints are defined for the first UCI part UCI0, respectively associated with a combination of different meanings.

According to a further example, the non-transmission (DTX) of the first UCI part UCI0 can also be associated with a specific meaning, e.g. can be understood as meaning neither data nor the UCI part(s) transmitted in the current periodic uplink resource. Accordingly, the previous meaning of the codepoint "000" can already be indicated by this non-transmission such that a different indication can be encoded by the codepoint "000".

Further to the above examples for the bit definitions of UCI0, the second UCI part UCI1 may e.g. include any of the above discussed implementations and variants for the unused-resource indication.

Further implementations of the improved transmission procedure, which can be combined with any of the other described implementations, provide an improvement on how the first and second UCI parts can be transmitted together with other uplink control information. In particular, the UE may transmit other uplink control information, such as one or more of channel state information (CSI) and retransmission feedback (e.g. HARQACK/NACK). This other uplink control information can be transmitted together with or separate from the first UCI part and/or the second UCI part.

Furthermore, if transmitted together, the other uplink control information can be coded separately or jointly with the respective UCI0 / UCI1 part with which it is transmitted together.

In the implementations and variants of the first solution explained in other parts herein, the improved transmission procedure involves the determination of unused resources, information on which is then transmitted to the base station by use of a suitable unused-resource indication. Moreover, further implementations of the improved transmission procedure, which can be combined with any of the other described implementations, provide more details with respect to this determination of the unused resources.

According to one example, the UE may perform this determination of the unused periodic uplink resources to be indicated in such a manner so as to facilitate that the data that was or will be transmitted (e.g. for the current video jitter window) can be transmitted using a periodic uplink radio resource that is different from those indicated unused uplink resources. This has the advantage that unused periodic uplink resources can be indicated to the base station (which can then re-schedule them) and thus reduces waste of resources, while at the same time facilitating that video frame data is transmitted in a timely manner.

On the other hand, the UE may also ignore this exemplary manner, such that the video frame data cannot be transmitted at all or only with a significant delay.

Moreover, the UE can take different information into account for determining which of the available periodic uplink radio resources will be unused and can be indicated as unused to the base station. This determination step also depends on the point in time at which the UE performs the determination, e.g. with relation to the point of time at which the video frame data is generated and/or the point of time at which the UE determines which periodic uplink radio resource will be used to transmit the video frame data.

According to one example, the video frame data has already been generated and the UE has already determined which periodic uplink radio resource will be used for transmitting the video frame data. In said case, the determination of unused periodic uplink radio resources to be indicated can be based on the available information on which periodic radio resources will be used for transmitting the data and which not. Accordingly, the UE can determine that there is no need for other periodic uplink radio resources to be used for transmitting the generated video frame data, and may determine that all or part of these unused periodic uplink radio resources can be reported to the base station, by use of the unused-resource indication.

According to another example, the video frame data has not been yet generated at the time the UE determines which periodic uplink radio resources it wants to indicate as being unused. In said case, the UE can determine in advance the unused periodic radio resources to be indicated.

To said end, the UE can e.g. first estimate one or more of the generating time and the size of the video frame data to be generated. This estimation can be done by the UE e.g. based on information that is provided by upper layers of the UE or from the frame encoder, particularly those that are responsible for the generation of the data. For instance, this information can include information obtained from the frame encoder, e.g. how long does it take for the encoder to encode the frame. It can thus be expected that the estimation is more or less accurate.

On the other hand, should such information from upper layers not be available for the estimation (e.g. temporarily or not at all), the estimation can still be performed. In particular, as one example, the UE may perform a cautious estimate, according to which the frame data will be generated at or near the end of the jitter window and a large size (or even the maximum) of video frame data is assumed by the UE.

Then, based on this estimation of the generating time and/or the size of the video frame time, the UE can set in advance unused periodic radio resources to be indicated to the base station.

The above described variants on how to determine unused radio resource has the advantage that the indication of the unused radio resources is quite flexible, since it is independent from the actual generation of the data and the UE's transmission of said data. Consequently, it facilitates reducing waste of resources.

In the implementations and variants of the first solution explained in other parts herein, the improved transmission procedure involves the transmission of data (e.g. of a video frame) and the corresponding configuration of periodic uplink resources for transmitting said data. However, the improved transmission procedures are not limited thereto, but rather can also be applied to cases in which uplink control information is to be transmitted by the UE and in which the UE is configured with corresponding periodic uplink resources for transmission of said uplink control information (e.g. via an uplink control channel).

As examples, such uplink control information, for the transmission of which the UE might have been configured with periodic uplink resources, could be one or more of a scheduling request, channel state information, and retransmission protocol feedback.

The determination of unused periodic uplink resources that the UE will not use and the transmission of a suitable unused-resource indication can be performed according to any one of the previously-described implementations and variants. In more detail, the previously-assumed "data" would be here the uplink control information (e.g. scheduling request and/or channel state information), and the previously-assumed periodic uplink resources configured for the data transmission would be here the periodic uplink resources configured for the transmission of said uplink control information.

According to an exemplary 5G compliant implementation, the uplink control information could be the channel state information (CSI), the ACK/NACK information and scheduling requests. Not all of these need to be carried by a single PUCCH transmission. For instance, the CSI may be carried alone, or the ACK/NACK may be carried alone, or the SR may be carried alone, or the CSI and ACK/NACK are transmitted together in a PUCCH etc., as defined in the corresponding 3GPP standards. The UCI can be transmitted on the PUCCH using specifically assigned radio resources, e.g. PUCCH resource sets with which the UE can be configured. The configuration of such resources can be done by different information elements, e.g. of the RRC protocol layer, such as the PUCCH-Config information element (see e.g. 3GPP TS 38.331 e.g. v17.2.0, such as section 6.3.2). The current reporting of the UCI in the PUCCH is defined in 3GPP TS 38.213 e.g. v17.4.0, section 9.2.

The transmission of a scheduling request using the PUCCH is defined in 3GPP TS 38.213 e.g. v17.4.0, section 9.2.4. In said respect, the configuration of such SR resources for transmission can be done by different information elements, e.g. of the RRC protocol layer, such as the *SchedulingRequestConfig* information element and the *SchedulingRequestResourceConfig* information element (see e.g. 3GPP TS 38.331 v17.2.0, such as section 6.3.2).

### Second Solution - dynamically allocated uplink radio resources

As mentioned briefly above, the second solution focuses on the case where the uplink radio resources for transmission of data are not periodic, e.g. are dynamically allocated to the UE by the base station. Exemplary, one or more uplink radio resources can be allocated by the base station to the UE. In one example, the dynamic allocation by the base station is performed in response to a corresponding resource request from the UE sent when data becomes available for transmission.

The improved transmission procedure in accordance with this second solution provides an unused-resource indication, which indicates which of the dynamically-allocated uplink radio resources will not be used by the UE for transmission.

In principle, the unused-resource indication can be defined in a corresponding manner as explained in detail above for the first solution, i.e. based on a bitmap, a codepoint, a start and duration, and a process ID for a retransmission feedback protocol.

According to one exemplary implementation, the unused-resource indication indicates a period of time during which any dynamically-allocated uplink radio resource will not be used. For instance, the period of time could be in a unit of time, e.g. a number of ms, or in a unit of frames, subframes, slots, OFDM symbols etc. Alternatively, the unused-resource indication may indicate one or more time instances, such as particular frames, subframes, slots, OFDM symbols, etc., at which any dynamically-allocated uplink resource will not be used by the UE. Still alternatively, the unused-resource indication indicates one or more process IDs of a retransmission feedback protocol used for the exchange of data with the base station. Correspondingly, the unused-resource indication may include a list of process IDs, each of which can be associated with one or more of the dynamically-allocated uplink resources.

The unused-resource indication can be transmitted using one of the dynamically-allocated uplink resources. Alternatively, the unused-resource indication can be carried through a resource of an uplink control channel (such as the PUCCH resources).

According to a further example, in case the UE is not configured with such uplink resources (e.g. no PUCCH resources are configured), the UE can also send the unused-resource indication using a random access channel procedure (e.g. the PRACH). In said case, a set of different preambles can be defined in advance between the UE and the base station, each preamble being associated with a different definition of the unused-resource indication: e.g. a first preamble associated with one period of time and meaning that dynamically-allocated radio resource during said period of time will not be used by the UE, a second preamble being associated with another period of time (e.g. meaning that the next three dynamically allocated uplink resources will not be used), and so on.

The UE thus can transmit the unused-resource indication by transmitting that preamble that corresponds to what the UE intends to indicate to the base station as unused uplink resources.

The base station, when receiving the preamble, will be able to determine the unused resources indicated by the UE, following the same understanding as the UE when selecting the preamble.

### Further Aspects

According to a first aspect, a user equipment, is provided that includes the following. A processing circuitry of the UE generates data for transmission to a base station. The processing circuitry determines at least one of a plurality of uplink radio resources to be used by the UE for transmitting the data. A transmitter of the UE transmits the data to the base station using the determined at least one uplink radio resource. The processing circuitry determines at least one of the plurality of uplink radio resources not to be used by the UE for transmission. The transmitter transmits an unused-resource indication to the base station, indicating the determined at least one uplink radio resource that will not be used by the UE for transmission.

According to a second aspect provided in addition to the first aspect, wherein the plurality of uplink radio resources is a plurality of periodic uplink radio resources. In one optional implementation, the plurality of periodic uplink radio resources relates to an uplink shared channel or to an uplink control channel. In one optional implementation, the UE is configured with one or more periodic-uplink-resource configurations, each of which configures periodic uplink radio resources usable by the UE to transmit data to the base station without a prior scheduling request from the UE to the base station.

According to a third aspect provided in addition to the second aspect, the unused-resource indication includes a bitmap, wherein each bit of the bitmap is associated with one periodic uplink radio resource, and one value of the bit of the bitmap indicates that the associated periodic uplink radio resource will not be used by the UE for transmission. In one optional implementation, the other value of the bit of the bitmap indicates that the associated periodic uplink radio resource may possibly be used by the UE for transmission. In one optional implementation, the bitmap includes n bits, and wherein a first bit of the n-bit bitmap is associated with the next available periodic uplink radio resource, wherein a second bit of the n-bit bitmap is associated with the second-next available periodic uplink radio resource, wherein an n-th bit of the n-bit bitmap is associated with the n-th-next available periodic uplink radio resource, wherein n is an integer number greater than 0. In one optional implementation, a number of bits of the bitmap is the same number as a number of periodic uplink radio resources in a set of plural periodic uplink radio resources defined by one periodic-uplink-resource configuration. In one optional implementation, a number of bits of the bitmap is less than a number of periodic uplink radio resources in a set of plural periodic uplink radio resources defined by one periodic-uplink-resource configuration. In one optional implementation, a number of bits of the bitmap is larger than a number of periodic uplink radio resources in a set of plural periodic uplink radio resources defined by one periodic-uplink-resource configuration.

According to a fourth aspect provided in addition to any one of the second to third aspects, the processing circuitry, in operation, determines a value of a codepoint consisting of one or more bits of the unused-resource indication based on a codepoint mapping and the determined at least one unused periodic uplink radio resource. The codepoint mapping maps different values of the codepoint to different candidates of unused periodic uplink radio resources. In one optional implementation, a first codepoint value indicates that the next one periodic uplink radio resource will not be used by the UE, wherein a second codepoint value indicates that the next two periodic uplink radio resources will not be used by the UE, wherein an m-th codepoint value indicates that the next m periodic uplink radio resources will not be used by the UE, wherein m is an integer number equal to or greater than 0. In one optional implementation, a first codepoint value indicates that the next x periodic uplink radio resources will not be used by the UE, wherein x is an integer number equal to or greater than 0, wherein a second codepoint value indicates that the next y-th and z-th periodic uplink radio resources will not be used by the UE, wherein y and z are integer numbers greater than 0, wherein a third codepoint value indicates that all periodic uplink radio resources may possibly be used by the UE.

According to a fifth aspect, provided in addition to any one of the second to fourth aspects, the unused-resource indication indicates a periodic uplink radio resource as a start of a sequence of one or more unused periodic uplink radio resources and indicates a duration of the sequence of one or more unused periodic uplink radio resources. In one optional implementation, the duration of the sequence is given as a number of periodic uplink radio resources. In one optional implementation, the processing circuitry determines a value of the unused-resource indication, based on a start-duration mapping and the determined at least one unused periodic uplink radio resource. The start-duration mapping maps different values of the unused-resource indication to different combinations of possible starts and durations of a sequence of one or more unused periodic uplink radio resources. In one optional implementation, the processing circuitry determines the start-duration mapping, and the transmitter transmits the determined start-duration mapping to the base station. In one optional implementation, a receiver of the UE receives the start-duration mapping from the base station, optionally in a message of the Radio Resource Control, RRC, protocol.

According to a sixth aspect, provided in addition to any one of the second to fifth aspects, the unused-resource indication indicates one or more process IDs of a retransmission feedback protocol used for the exchange of the data with the base station. Each one retransmission feedback protocol process is associated with one of the periodic uplink radio resources. In one optional implementation, the retransmission feedback protocol process is a Hybrid-automatic repeat request, HARQ, process.

According to a seventh aspect, provided in addition to any one of the second to sixth aspects, the unused-resource indication includes different parts, wherein each part of the unused-resource indication is associated with a different one of a plurality of periodic-uplink-resource configurations and is usable to indicate unused periodic uplink radio resources of the respective periodic-uplink-resource configuration. In one optional implementation, a first part of the plurality of periodic uplink radio resources is configured by a first periodic-uplink-resource configuration, and a second part of the plurality of periodic uplink radio resources is configured by a second periodic-uplink-resource configuration. A first part of the unused-resource indication indicates the determined at least unused uplink radio resource for the first periodic-uplink-resource configuration, and a second part of the unused-resource indication indicates the determined at least unused uplink radio resource for the second periodic-uplink-resource configuration. In one optional implementation, the determining the at least one unused periodic uplink radio resource is performed by the processing circuitry for one or both of the first part and the second part of the plurality of periodic uplink radio resources.

According to an eighth aspect provided in addition to any one of the second to seventh aspects, wherein the at least one periodic uplink radio resource for transmitting the data and the at least one unused periodic uplink radio resource are among a set of plural periodic uplink radio resources defined by one periodic-uplink-resource configuration. The unused-resource indication is transmitted using one periodic uplink radio resource among the set of plural periodic uplink radio resource. A size of the unused-resource indication is determined, by the processing circuitry, depending on a set position of the one periodic uplink radio resource used for transmitting the unused-resource indication, optionally wherein the size is determined to be the smaller the latter the set position is among the set of plural periodic uplink radio resources.

According to a ninth aspect provided in addition to any one of the second to eighth aspects, the transmitter transmits, in a first part of uplink control information, information on whether the unused-resource indication is transmitted. The unused-resource indication is transmitted in a second part of the uplink control information. In one optional implementation, the first part of the uplink control information further includes information on one or more of:
- a size of the unused-resource indication,
- a coding rate with which the unused-resource indication is coded,
- a modulation scheme with which the unused-resource indication is modulated,
- a frequency band and an Orthogonal Frequency Division Multiplexing, OFDM, symbol carrying the second part of the uplink control information,
- whether the periodic uplink radio resource carrying the first part of the uplink control information also carries the data,
- a coding rate with which the transmitted data is coded,
- a modulation scheme with which the transmitted data is modulated,
- the amount of the periodic uplink radio resource being used for transmitting the data, and
- a transport block size of the transmitted data.

In one optional implementation, the first and second parts of the uplink control information are transmitted in a same periodic uplink radio resource but at a different part of said periodic uplink radio resource, for instance at a different Orthogonal Frequency Division Multiplexing, OFDM, symbol and/or a different frequency band; further optionally, the first part of the uplink control information is transmitted at one or more initial OFDM symbols of said periodic uplink radio resource. In one optional implementation, one or both of the first and second parts of the uplink control information are coded together with or separately from other uplink control information, the other uplink control information including for instance one or more of channel state information and re-transmission protocol feedback information.

According to a tenth aspect provided in addition to any one of the second to ninth aspects, the determining of the at least one unused periodic uplink radio resource, performed by the processing circuitry, is such that the data can be transmitted using a periodic uplink radio resource among the plurality of periodic uplink radio resources different from the at least one unused periodic uplink radio resource. In one optional implementation, the determining of the at least one unused periodic uplink radio resource, performed by the processing circuitry, is based on information on the uplink radio resources determined for transmitting the data.

In one optional implementation, in case the determining of the at least one unused periodic uplink radio resource is before a time at which the data is generated, the determining of the at least one unused periodic uplink radio resource, performed by the processing circuitry, involves:
- estimating one or more of a generating time at which the data is to be generated and a size of the data to be generated, and
- wherein the determining of the at least one unused periodic uplink radio resource is based on one or more of the estimated generating time and the estimated size of the data to be generated.

In one optional implementation, the estimating of the generating time and the size of the data to be generated is based on information provided by upper layers of the UE responsible for the generating of the data.

According to an eleventh aspect provided in addition to any one of the second to tenth aspects, the unused-resource indication is transmitted in a periodic uplink radio resource prior to the periodic uplink radio resource used for transmitting the data or prior to the generation of the data.

According to a twelfth aspect, provided in addition to the first aspect, the plurality of uplink radio resources is dynamically scheduled by the base station. The unused-resource indication indicates which of the dynamically-allocated uplink radio resources will not be used by the UE for transmission. In one optional implementation, the unused-resource indication indicates a period of time, during which any dynamically-allocated uplink radio resource will not be used by the UE for transmission. In one optional implementation, the unused-resource indication indicates one or more time instances, at which the corresponding dynamically-allocated uplink radio resource will not be used by the UE for transmission. In one optional implementation, the unused-resource indication indicates one or more process IDs of a retransmission feedback protocol used for the exchange of the data with the base station, wherein each one retransmission feedback protocol process is associated with one of the dynamically-scheduled uplink radio resources.

According to a thirteenth aspect, provided in addition to any one of the first to twelfth aspects, the data is data having one or more of a varying size and a varying generation periodicity. In one optional implementation, the data is data of a video frame or of a segment of a video frame, wherein the processing circuitry operates a video application, according to which video frames are generated with a video frame periodicity, wherein each video frame is generated within a jitter window having a jitter window length. In one optional implementation, the video application is an application for eXtended Reality, XR.

According to a fourteenth aspect, a method is provided comprising the following steps performed by a user equipment, UE:
generating data for transmission to a base station,
determining at least one of a plurality of uplink radio resources to be used by the UE for transmitting the data,
transmitting the data to the base station using the determined at least one uplink radio resource,
wherein the method also comprises:
   determining at least one of the plurality of uplink radio resources not to be used by the UE for transmission,
   transmitting an unused-resource indication, indicating the determined at least one uplink radio resource that will not be used by the UE for transmission.

According to a fifteenth aspect, a base station is provided comprising the following. A receiver of the base station receives data from a user equipment, UE, using at least one of a plurality of uplink radio resources. The receiver receives from the UE an unused-resource indication, indicating at least one uplink radio resource, among the plurality of uplink radio resources, that will not be used by the UE for transmission. Processing circuitry of the UE processes the received unused-resource indication to determine the at least one unused uplink radio resource.

According to a sixteenth fifteenth aspect, providing in addition to the fifteenth aspect, the processing circuitry performs scheduling of some or all of the at least one unused uplink radio resource to another UE.

According to a seventeenth aspect, a method is provided comprising the following steps performed by a base station:
receiving data from a user equipment, UE, using at least one of a plurality of uplink radio resources,
receiving an unused-resource indication, indicating at least one uplink radio resource, among the plurality of uplink radio resources, that will not be used by the UE for transmission,
processing the received unused-resource indication to determine the at least one unused uplink radio resource.

According to an eighteenth aspect, an integrated circuit is provided, which, in operation, controls a process of a user equipment, UE, the process comprising the following steps performed by the UE:
generating data for transmission to a base station,
determining at least one of a plurality of uplink radio resources to be used by the UE for transmitting the data,
transmitting the data to the base station using the determined at least one uplink radio resource,
wherein the process also comprises:
   determining at least one of the plurality of uplink radio resources not to be used by the UE for transmission,
   transmitting an unused-resource indication, indicating the determined at least one uplink radio resource that will not be used by the UE for transmission.

According to a nineteenth aspect, an integrated circuit is provided, which, in operation, controls a process of a base station, the process comprising the following steps performed by the base station:
receiving data from a user equipment, UE, using at least one of a plurality of uplink radio resources,
receiving an unused-resource indication, indicating at least one uplink radio resource, among the plurality of uplink radio resources, that will not be used by the UE for transmission,
processing the received unused-resource indication to determine the at least one unused uplink radio resource.

### Further Variants, including Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC (integrated circuit), a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT).

The communication may include exchanging data through, for example, a cellular system, a wireless LAN system, a satellite system, etc., and various combinations thereof.

The communication apparatus may comprise a device such as a controller or a sensor, which is coupled to a communication device performing a function of communication described in the present disclosure. For example, the communication apparatus may comprise a controller or a sensor that generates control signals or data signals, which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

## Claims

1. A user equipment, UE, comprising:
processing circuitry, which in operation, generates data for transmission to a base station,
the processing circuitry, which in operation, determines at least one of a plurality of uplink radio resources to be used by the UE for transmitting the data,
a transmitter, which in operation, transmits the data to the base station using the determined at least one uplink radio resource,
the processing circuitry, which in operation, determines at least one of the plurality of uplink radio resources not to be used by the UE for transmission,
the transmitter, which in operation, transmits an unused-resource indication to the base station, indicating the determined at least one uplink radio resource that will not be used by the UE for transmission.

2. The UE according to claim 1, wherein the plurality of uplink radio resources is a plurality of periodic uplink radio resources,
optionally wherein the plurality of periodic uplink radio resources relates to an uplink shared channel or to an uplink control channel,
optionally wherein the UE is configured with one or more periodic-uplink-resource configurations, each of which configures periodic uplink radio resources usable by the UE to transmit data to the base station without a prior scheduling request from the UE to the base station.

3. The UE according to claim 2, wherein the unused-resource indication includes a bitmap, wherein each bit of the bitmap is associated with one periodic uplink radio resource, and one value of the bit of the bitmap indicates that the associated periodic uplink radio resource will not be used by the UE for transmission ,
optionally wherein the other value of the bit of the bitmap indicates that the associated periodic uplink radio resource may possibly be used by the UE for transmission ,
optionally wherein the bitmap includes n bits, and wherein a first bit of the n-bit bitmap is associated with the next available periodic uplink radio resource, wherein a second bit of the n-bit bitmap is associated with the second-next available periodic uplink radio resource, wherein an n-th bit of the n-bit bitmap is associated with the n-th-next available periodic uplink radio resource, wherein n is an integer number greater than 0,
optionally wherein a number of bits of the bitmap is the same number as a number of periodic uplink radio resources in a set of plural periodic uplink radio resources defined by one periodic-uplink-resource configuration,
optionally wherein a number of bits of the bitmap is less than a number of periodic uplink radio resources in a set of plural periodic uplink radio resources defined by one periodic-uplink-resource configuration, and
optionally wherein a number of bits of the bitmap is larger than a number of periodic uplink radio resources in a set of plural periodic uplink radio resources defined by one periodic-uplink-resource configuration.

4. The UE according to any one of claims 2 to 3, wherein the processing circuitry, in operation, determines a value of a codepoint consisting of one or more bits of the unused-resource indication based on a codepoint mapping and the determined at least one unused periodic uplink radio resource, wherein the codepoint mapping maps different values of the codepoint to different candidates of unused periodic uplink radio resources,
optionally wherein a first codepoint value indicates that the next one periodic uplink radio resource will not be used by the UE, wherein a second codepoint value indicates that the next two periodic uplink radio resources will not be used by the UE, wherein an m-th codepoint value indicates that the next m periodic uplink radio resources will not be used by the UE, wherein m is an integer number equal to or greater than 0,
optionally wherein a first codepoint value indicates that the next x periodic uplink radio resources will not be used by the UE, wherein x is an integer number equal to or greater than 0, wherein a second codepoint value indicates that the next y-th and z-th periodic uplink radio resources will not be used by the UE, wherein y and z are integer numbers greater than 0, wherein a third codepoint value indicates that all periodic uplink radio resources may possibly be used by the UE.

5. The UE according to any one of claims 2 to 4, wherein the unused-resource indication indicates a periodic uplink radio resource as a start of a sequence of one or more unused periodic uplink radio resources and indicates a duration of the sequence of one or more unused periodic uplink radio resources, and
optionally wherein the duration of the sequence is given as a number of periodic uplink radio resources,
optionally wherein the processing circuitry, in operation, determines a value of the unused-resource indication, based on a start-duration mapping and the determined at least one unused periodic uplink radio resource, wherein the start-duration mapping maps different values of the unused-resource indication to different combinations of possible starts and durations of a sequence of one or more unused periodic uplink radio resources,
optionally wherein the processing circuitry, in operation, determines the start-duration mapping, and the transmitter, in operation, transmits the determined start-duration mapping to the base station,
optionally wherein a receiver of the UE, in operation, receives the start-duration mapping from the base station, optionally in a message of the Radio Resource Control, RRC, protocol.

6. The UE according to any one of claims 2 to 5, wherein the unused-resource indication indicates one or more process IDs of a retransmission feedback protocol used for the exchange of the data with the base station, wherein each one retransmission feedback protocol process is associated with one of the periodic uplink radio resources,
optionally wherein the retransmission feedback protocol process is a Hybrid-automatic repeat request, HARQ, process.

7. The UE according to any one of claims 2 to 6, wherein the unused-resource indication includes different parts, wherein each part of the unused-resource indication is associated with a different one of a plurality of periodic-uplink-resource configurations and is usable to indicate unused periodic uplink radio resources of the respective periodic-uplink-resource configuration,
optionally wherein a first part of the plurality of periodic uplink radio resources is configured by a first periodic-uplink-resource configuration, and a second part of the plurality of periodic uplink radio resources is configured by a second periodic-uplink-resource configuration, wherein a first part of the unused-resource indication indicates the determined at least unused uplink radio resource for the first periodic-uplink-resource configuration, and a second part of the unused-resource indication indicates the determined at least unused uplink radio resource for the second periodic-uplink-resource configuration, and
optionally wherein the determining the at least one unused periodic uplink radio resource is performed by the processing circuitry for one or both of the first part and the second part of the plurality of periodic uplink radio resources.

8. The UE according to any one of claims 2 to 7, wherein the at least one periodic uplink radio resource for transmitting the data and the at least one unused periodic uplink radio resource are among a set of plural periodic uplink radio resources defined by one periodic-uplink-resource configuration,
wherein the unused-resource indication is transmitted using one periodic uplink radio resource among the set of plural periodic uplink radio resources,
wherein a size of the unused-resource indication is determined, by the processing circuitry, depending on a set position of the one periodic uplink radio resource used for transmitting the unused-resource indication, optionally wherein the size is determined to be the smaller the latter the set position is among the set of plural periodic uplink radio resources.

9. The UE according to any one of claims 2 to 8, wherein the transmitter, in operation, transmits, in a first part of uplink control information, information on whether the unused-resource indication is transmitted, and wherein the unused-resource indication is transmitted in a second part of the uplink control information,
optionally wherein the first part of the uplink control information further includes information on one or more of:
- a size of the unused-resource indication,
- a coding rate with which the unused-resource indication is coded,
- a modulation scheme with which the unused-resource indication is modulated,
- a frequency band and an Orthogonal Frequency Division Multiplexing, OFDM, symbol carrying the second part of the uplink control information,
- whether the periodic uplink radio resource carrying the first part of the uplink control information also carries the data,
- a coding rate with which the transmitted data is coded,
- a modulation scheme with which the transmitted data is modulated,
- the amount of the periodic uplink radio resource being used for transmitting the data, and
- a transport block size of the transmitted data,
optionally wherein the first and second parts of the uplink control information are transmitted in a same periodic uplink radio resource but at a different part of said periodic uplink radio resource, for instance at a different Orthogonal Frequency Division Multiplexing, OFDM, symbol and/or a different frequency band, optionally wherein the first part of the uplink control information is transmitted at one or more initial OFDM symbols of said periodic uplink radio resource,
optionally wherein one or both of the first and second parts of the uplink control information are coded together with or separately from other uplink control information, the other uplink control information including for instance one or more of channel state information and re-transmission protocol feedback information.

10. The UE according to any one of claims 2 to 9, wherein the determining of the at least one unused periodic uplink radio resource, performed by the processing circuitry, is such that the data can be transmitted using a periodic uplink radio resource among the plurality of periodic uplink radio resources different from the at least one unused periodic uplink radio resource,
optionally wherein the determining of the at least one unused periodic uplink radio resource, performed by the processing circuitry, is based on information on the uplink radio resources determined for transmitting the data,
optionally wherein in case the determining of the at least one unused periodic uplink radio resource is before a time at which the data is generated, the determining of the at least one unused periodic uplink radio resource, performed by the processing circuitry, involves:
- estimating one or more of a generating time at which the data is to be generated and a size of the data to be generated, and
- wherein the determining of the at least one unused periodic uplink radio resource is based on one or more of the estimated generating time and the estimated size of the data to be generated,
optionally wherein the estimating of the generating time and the size of the data to be generated is based on information provided by upper layers of the UE responsible for the generating of the data.

11. The UE according to any one of claims 2 to 10, wherein the unused-resource indication is transmitted in a periodic uplink radio resource prior to the periodic uplink radio resource used for transmitting the data or prior to the generation of the data.

12. The UE according to claim 1, wherein the plurality of uplink radio resources is dynamically scheduled by the base station,
wherein the unused-resource indication indicates which of the dynamically-allocated uplink radio resources will not be used by the UE for transmission,
optionally wherein the unused-resource indication indicates a period of time, during which any dynamically-allocated uplink radio resource will not be used by the UE for transmission,
optionally wherein the unused-resource indication indicates one or more time instances, at which the corresponding dynamically-allocated uplink radio resource will not be used by the UE for transmission,
optionally wherein the unused-resource indication indicates one or more process IDs of a retransmission feedback protocol used for the exchange of the data with the base station, wherein each one retransmission feedback protocol process is associated with one of the dynamically-scheduled uplink radio resources.

13. A method comprising the following steps performed by a user equipment, UE:
generating data for transmission to a base station,
determining at least one of a plurality of uplink radio resources to be used by the UE for transmitting the data,
transmitting the data to the base station using the determined at least one uplink radio resource,
wherein the process also comprises:
determining at least one of the plurality of uplink radio resources not to be used by the UE for transmission,
transmitting an unused-resource indication, indicating the determined at least one uplink radio resource that will not be used by the UE for transmission.

14. A base station comprising:
a receiver, which in operation, receives data from a user equipment, UE, using at least one of a plurality of uplink radio resources,
the receiver, which in operation, receives from the UE an unused-resource indication, indicating at least one uplink radio resource, among the plurality of uplink radio resources, that will not be used by the UE for transmission,
processing circuitry, which in operation, processes the received unused-resource indication to determine the at least one unused uplink radio resource.

15. The base station according to claim 14, wherein the processing circuitry, in operation, performs scheduling of some or all of the at least one unused uplink radio resource to another UE.
